(19) Europäisches Patentamt
European Patent Office
Office européen des brevets

(11) EP 0 551 221 B1

(12) FASCICULE DE BREVET EUROPEEN

(45) Date de publication et mention de la délivrance du brevet:
**04.06.1997 Bulletin 1997/23**

(51) Int Cl.[6]: **C08F 297/02**, C08G 81/02

(21) Numéro de dépôt: **93400007.6**

(22) Date de dépôt: **05.01.1993**

# (54) Procédé de fabrication de polycondensats multiséquencés, en étoile ou en réseaux par couplage à l'aide de di- ou multi-aldéhydes, et polycondensats ainsi obtenus

Verfahren zur Herstellung von Stern- oder Netzwerk-Multiblockpolykondensaten durch Kupplung von Di- oder Multi-Aldehyden und damit hergestellten Polykondensaten

Process for the preparation of star or network multiblock polycondensates by coupling di- or multi-adhehydes, and polycondensate thus obtained

(84) Etats contractants désignés:
**AT BE CH DE DK ES FR GB GR IE IT LI LU NL PT SE**

(30) Priorité: **10.01.1992 FR 9200200**

(43) Date de publication de la demande:
**14.07.1993 Bulletin 1993/28**

(73) Titulaire: **ELF ATOCHEM S.A.**
**92800 Puteaux (FR)**

(72) Inventeur: **Gnanou, Yves**
**F-33400 Talence (FR)**

(74) Mandataire: **Hirsch, Marc-Roger et al**
**Cabinet Hirsch**
**34 rue de Bassano**
**75008 Paris (FR)**

(56) Documents cités:
**EP-A- 0 258 065** **DE-A- 2 019 473**

- **DATABASE WPI Week 6800, Derwent Publications Ltd., London, GB; AN 68-28226Q**
- **POLYMER PREPRINTS vol. 29, no. 2, Septembre 1988, pages 48 - 49 D. SMITH 'Synthesis of poly(methyl methacrylate) macromonomers via anionic polymerizations'**
- **DATABASE WPI Week 6800, Derwent Publications Ltd., London, GB; AN 68-81945P**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 551 221 B1

## Description

La présente invention a pour objet un nouveau procédé de fabrication de polycondensats et se rapporte aux polycondensats ainsi obtenus.

Les polymères et copolymères blocs séquencés, appelés ci-dessous "(co)polymères blocs" contenant des unités "acryliques ou methacryliques" définies ci-dessous par le terme générique de "(meth)acrylique" ont une grande importance et sont largement utilisés dans l'industrie. Leurs propriétés, dues à la présence de ces blocs, conduisent à de nombreuses applications; néanmoins, celles-ci sont parfois limitées à cause du faible poids moléculaire de ces (co) polymères blocs. De plus, une structure parfaitement définie, telle qu'un arrangement en étoile avec un nombre de branches donné ou un séquençage particulier, c'est-à-dire une topochimie particulière, conduirait à doter ces (co) polymères blocs d'autres propriétés. De nombreux efforts ont été faits afin d'augmenter le poids moléculaire des copolymères blocs contenant des blocs poly(meth)acrylate, par couplage notamment. Des efforts ont aussi été faits afin de modifier leur séquençage pour conduire, par exemple, par couplage de polymère biséquencé A-B à des polymères triséquencés A-B-A difficiles à obtenir par voie directe ou à des polymères à structure en étoile. On a donc cherché à coupler des polymères A, ou copolymères A-B, A-B-A, A-B-C, etc., afin d'obtenir des co-(polymères) blocs de type A-A, A-B-B-A, A-B-A-A-B-A, A-B-C-C-B-A, etc., ainsi que des (co)polymères en étoile.

Le document DE2019473 décrit un procédé de préparation de polymères séquencés, dans lequel des séquences élastomères contenant plus de 70% de diènes cojugués sont couplées par un agent fonctionnel.L'agent fonctionnel est choisi dans une liste d'une dizaine de composés, seul le styrène et le polyhalogénure étant exemplifiés.

De nombreuses techniques de polymérisation notamment d'unités (meth)acryliques ont été développées au cours de ces dernières années. Parmi celles-ci, il faut citer la polymérisation par transfert de groupe (GTP). Cette technique conduit à l'obtention de polymères "vivants", c'est-à-dire ayant une extrémité anionique donc très réactive et permet la préparation de polymères fonctionnalisés pouvant être couplés à l'aide d'un diisocyanate, ainsi que des polymères à structure définie. Néanmoins, cette technique présente l'inconvénient de nécessiter la synthèse préliminaire de silylcétène acétal en tant qu'initiateur, et la GTP n'est pas applicable à la synthèse de copolymères séquencés contenant des motifs non-(meth)acryliques.

S.D. Smith, dans Polymer Preprints, vol. 29, n° 2, 1988, LN°3776, pp. 48-49, décrit la réaction entre l'extrémité carbanion d'une unité méthacrylique et un groupe aldéhyde. Cette réaction entre des anions méthacryliques "vivants" et la benzaldéhyde est très sélective et conduit à des extrémités $O^-$, -OH, c'est-à-dire fonctionnalisées.

FR-2 469 400 décrit des copolymères étoilés ainsi que leur procédé d'obtention. Les "branches" de l'étoile sont formées par des copolymères contenant au moins un bloc d'unités (meth)acryliques et sont liées à un centre constitué d'un agent de réticulation multifonctionnel. Cet agent peut notamment être choisi parmi les poly(meth)acrylates de polyols. Malheureusement, le nombre de branches n'est pas contrôlé et le produit résultant ne présente pas les qualités requises.

FR-90 1724 décrit des polymères multiséquencés fonctionnalisés et leur procédé de fabrication. Ces polymères contiennent des blocs poly(meth)acrylates et sont fonctionnalisés à leurs extrémités. Ce brevet ne fait aucunement mention de couplage. Ainsi, le procédé décrit dans ce brevet, lorsqu'il est mis en oeuvre afin d'obtenir des poids moléculaires élevés ou un triséquençage prédéterminé par une voie de synthèse directe, conduit à une augmentation sensible du coût de fabrication.

La présente invention a pour objet un nouveau procédé de couplage de polymères contenant des unités (meth) acryliques terminales permettant l'obtention aisée et économique, d'une augmentation du poids moléculaire et/ou d'un multiséquençage défini, et/ou d'une structure étoilée dont le nombre de branches est défini.
Aucun des brevets ou références ci-dessus ne décrit ni n'enseigne un tel procédé.

Ainsi, la présente invention se rapporte un procédé de couplage d'un polymère vivant contenant des unités (meth) acryliques terminales vivantes qui comprend les étapes de:

(i) polymérisation anionique à l'aide d'un système initiateur constitué par un amorceur fonctionnel et un ligand afin d'obtenir un polymère vivant contenant des unités (meth)acryliques terminales vivantes;
(ii) réaction avec un composé aldéhyde de formule:

$$R\text{-}(CHO)_r$$

dans laquelle $r \geqq 2$; et le groupe R portant les fonctions aldéhyde est un groupe alkyle, cycloalkyle, aryle, aralkyle, contenant de 2 à 24 atomes de carbone, non-substitué ou substitué par un ou plusieurs substituants choisi(s) dans le groupe consistant en: alkyle en $C_{1-6}$, alkoxy en $C_{1-6}$ ou dialkyl($C_{1-6}$)amino, halogéno, trifluorométhyle; et
(iii) récupération du polycondensat final par des moyens connus en eux-mêmes.

Le terme "polymère vivant" tel qu'utilisé dans la présente description désigne un polymère dont une extrémité au moins est une extrémité anionique (ou "vivante") d'un monomère (meth)acrylique, c'est-à-dire

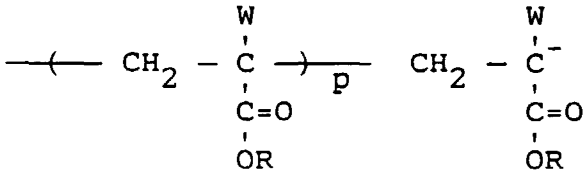

avec W = H ou Me.

Ce polymère est désigné ci-après $P^-$ ou $^-P^-$ , polymère monoanionique ou di-anionique respectivement, selon qu'il possède une ou deux extrémités vivantes.

Le polymère est constitué d'unités monomères choisies dans le groupe consistant en les monomères acryliques, méthacryliques, vinylaromatiques, diéniques, vinylpyridines, oxydes d'alkylène, lactames, lactones et maléimides.

Le terme "monomère (meth)acrylique" tel qu'employé dans la présente description signifie un monomère choisi parmi les (meth)acrylates d'alkyle, les mono- et di-alkyl(meth)acrylamides, les (meth)acrylates d'alkylthioalkyle ou d'alkoxylalkyle, et le (meth)acrylonitrile. Le groupe alkyle, linéaire ou ramifié, contient de 1 à 18 atomes de carbone. Il peut être non-substitué ou substitué avec un ou plusieurs groupes choisi parmi: halogéno, tels que chloro ou fluoro. Des exemples non-limitatifs sont: les (meth)acrylates de méthyle, d'éthyle, de 2,2,2-trifluoroéthyle, de n-propyle, d'isopropyle, de n-butyle, de sec-butyle, de tert-butyle, de n-amyle, d'i-amyle, d'hexyle, d'éthyl-2 hexyle, de cyclohexyle, d'octyle, d'i-octyle, de nonyle, de décyle, de lauryle, de stéaryle, de glycidyle, d'isobornyle, de norbornyle, de phényle, et autres.

Le monomère acrylique préféré est l'acrylate de tert-butyle, le bloc poly(tert-butylacrylate) étant ci-après désigné par PtBuA.

Le monomère méthacrylique préféré est le méthacrylate de méthyle, le bloc poly(méthylméthacrylate) étant ci-après désigné par PMMA.

Le terme "monomère vinylaromatique" tel qu'utilisé dans la présente description signifie un monomère aromatique à insaturation éthylénique. Des exemples non-limitatifs sont le styrène, le vinyltoluène, l'alphaméthylstyrène, le méthyl-4-styrène, le méthyl-3-styrène, le méthoxy-4-styrène, l'hydroxlyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tertbutyl-3-styrène, le dichloro-2,4-styrène, le dichloro-2,6-styrène, le vinyl-1-naphtalène et autres.

Le monomère préféré est le styrène, le bloc polystyrène étant ci-après désigné par PS.

Le terme "monomère diénique" tel qu'employé dans la présente invention désigne un diène choisi parmi les diènes linéaires ou cycliques, conjugués ou non-conjugués contenant de 1 à 20 atomes de carbone. Des exemples non-limitatifs sont: le butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène, le 1,5-cyclo-octadiène, le bicyclo[2,2,2] octa-2,5-diène, le cyclopentadiène, le 4,7,8,9-tétrahydroindène, l'isopropylidène, le tétrahydroindène et autres.

Le monomère préféré est le butadiène, le bloc polybutadiène étant désigné ci-après par PBut.

Le terme "oxydes d'alkylène" tel qu'employé dans la présente description désigne les groupes alkylènes contenant de 1 à 6 atomes de carbone et portant une fonction époxy. Des exemples sont: oxyde d'éthylène, de propylène.

Les termes "lactames et lactones" tels qu'employés dans la présente description désignent, respectivement, les amides et esters internes cycliques contenant de 4 à 12 atomes de carbone. Des exemples en sont le caprolactame et la caprolactone.

Le terme "vinylpyridines" tels qu'employé dans la présente description désigne un groupe pyridine portant un substituant à insaturation éthylénique. Le substituant à insaturation éthylénique, par exemple un groupe vinyle, peut se trouver en position 2, 3 ou 4 sur le cycle de pyridine. Le substituant, tout comme le cycle de pyridine peut être non-substitué ou substitué avec un ou plusieurs des groupes choisi parmi: alkyle en $C_{1-4}$, hydroxy, hydroxyalkyle en $C_{1-4}$, alkoxy en $C_{1-4}$, halogéno de préférence chloro. Des exemples sont: 2-, 3- ou 4-vinylpyridine, 2-, 3- ou 4-($\alpha$-méthylvinyl) pyridine, 4-éthyle-2- ou 3-vinylpyridine, 2,6-dichloro-4-vinylpyridine, 3-, 4- ou 5-($\alpha$-méthylvinyl)pyridine.

Les monomères préférés sont la 2-vinylpyridine et la 4-vinylpyridine, ces blocs étant ci-après désignés par P2VP, P4VP, respectivement.

Le terme "maléimides" tel qu'employé dans la présente description désigne un monomère maléimide non-substitué ou N-substitué de formule:

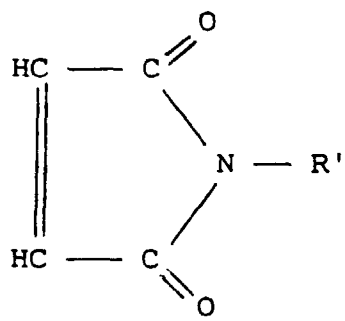

dans laquelle R' est un radical alkyle, arylalkyle, aryle ou alkylaryle ayant de 1 à 12 atomes de carbone.
Des exemples de tels monomères sont notamment: la N-éthylmaléimide, la N-isopropylmaléimide, la N-n-butylmaléimide, la N-isobutylmaléimide, la N-terbutylmaléimide, la N-n-octylmaléimide, la N-cyclohexylmaléimide, la N-benzylmaléimide et la N-phénylmaléimide.
La maléimide préférée est la N-cyclohexylmaléimide, le bloc étant désigné par NCHMI.

A l'issue de l'étape (i), le polymère "vivant" peut être mono- ou bi-anionique, $P^-$ ou $^-P^-$ respectivement, c'est-à-dire présentant une ou deux extrémités réactives. Les extrémités réactives sont les extrémités de blocs constitués de monomère (meth)acrylique. Le polymère vivant peut être constitué d'un, deux, trois, ou plusieurs blocs. Suivant l'amorceur mono- ou bi-fonctionnel, le polymère vivant est $P^-$ ou $^-P^-$ , respectivement.

Ces polymères vivants $P^-$ ou $^-P^-$ réagissent selon le procédé de la présente invention avec des composés portant au moins deux fonctions aldéhydes pour conduire à des polycondensats. Ces composés portant au moins deux fonctions aldéhydes peuvent être di- ou multi-fonctionnels.

Dans le cas de di-aldéhydes, les polymères vivants réagissent selon le procédé de la présente invention avec ces derniers pour conduire par couplage à des polycondensats de poids moléculaire plus élevé, de structure substantiellement linéaire. Le poids moléculaire est substantiellement doublé dans le cas des polymères vivants mono-anioniques. Le poids moléculaire est multiplié par un facteur dont la valeur peut être précisément contrôlée et typiquement compris entre 5 et 10, dans le cas des polymères vivants di-anioniques.

Dans le cas de multi-aldéhydes à r fonctions, les polycondensats finaux obtenus sont de deux natures, qui est fonction du polymère vivant de départ. Si le polymère "vivant" de départ est mono-anionique, le polycondensat final obtenu selon le procédé de la présente invention présente une structure en étoile à r branches, substantiellement. Si le polymère "vivant" de départ est bi-anionique, le polycondensat final obtenu selon le procédé de la présente invention présente une structure en réseau.

Selon un premier mode de réalisation de la présente invention, le procédé comprend les étapes de:

(i) polymérisation anionique d'un monomère A (meth)acrylique, à l'aide d'un système initiateur constitué par au moins un amorceur monofonctionnel et au moins un ligand conduisant au polymère vivant $(A)_a^-$, $a \leq 5000$;
(ii) réaction dudit polymère vivant $(A)_a^-$ avec un composé aldéhyde de formule $R(CHO)_r$, avec $r \geq 2$; et
(iii) récupération du polycondensat final par des moyens connus en eux-mêmes.

Selon ce premier mode de réalisation de la présente invention, le couplage par un dialdéhyde augmente le poids moléculaire et le couplage avec un multi-aldéhyde conduit à un polymère en étoile de formule $[(A)_a]_rR$ dont l'écart-type de r ($\sigma r$) est extrêmement faible.

Le polymère vivant $(A)_a^-$ a un poids moléculaire moyen de (1 000) à (500 000), de préférence de (2 000) à (300 000).
Le polymère vivant $(A)_a^-$ peut être:

- de type acrylique, de préférence polytert-butylacrylate ($PtBuA^-$);
- de type méthacrylique, de préférence polyméthylméthacrylate ($PMMA^-$).

Selon un second mode de réalisation de la présente invention, le procédé comprend les étapes de:

(i)

(a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur monofonctionnel et au moins un ligand

conduisant au polymère vivant $(A)_a^-$, a ≤ 5000;

(b) réaction dudit $(A)_a^-$ vivant avec un monomère B (meth)acrylique, différent de A, en présence d'au moins un ligand tel que défini ci-dessus, conduisant au copolymère biséquencé vivant $(A)_a$-$(B)_b^-$, b ≤ 5000; et

(ii) réaction dudit $(A)_a$-$(B)_b^-$ vivant avec un composé aldéhyde de formule R-$(CHO)_r$ avec r ≥ 2; et

(iii) récupération du polycondensat final par des moyens connus en eux-mêmes.

Selon ce second mode de réalisation de la présente invention, le couplage par dialdéhyde permet non seulement d'augmenter le poids moléculaire, mais aussi d'obtenir des copolymères triséquencés symétriques très facilement et économiquement. En effet, la synthèse directe d'un polymère bloc triséquencé du type $(A)_a$-$(B)_b$-$(A)_a$, avec B étant un motif (meth)acrylique, A étant différent de B, mais pouvant être une séquence (meth)acrylique différente, est difficile et coûteuse. La présente invention fournit donc un procédé comprenant les étapes de:

- polymérisation en $(A)_a^-$
- polymérisation en $(A)_a$-$(B)_{b/2}^-$
- couplage en $(A)_a$-$(B)_{b/2}$-R-$(B)_{b/2}$-$(A)_a$, soit en considérant le squelette portant les deux fonctions issues du composé aldéhyde comme négligeable, en $(A)_a$-$(B)_b$-$(A)_a$. De plus, il est aussi possible d'obtenir des polymères en étoile de formule $[(A)_a$-$(B)_b]_r$R, le nombre de branches étant aussi constant.

Les poids moléculaires des séquences $(A)_a$ et $(B)_b$ sont compris entre 1 000 et 500 000, de préférence entre 2 000 et 300 000. Les monomères A et B peuvent être présents, en poids, selon des rapports $(A)_a/(B)_b$ de 1/500 à 500/1, de préférence 1/99 à 99/1, avantageusement 5/95 à 95/5.
Le polymère vivant $(A)_a$-$(B)_b^-$ peut être, par exemple:

- méthacrylique/acrylique,
- vinylaromatique/(meth)acrylique,
- diénique/(meth)acrylique,
- vinylpyridine/(meth)acrylique,
- (meth)acrylique/maléimide,
- (meth)acrylique/oxyde d'alkylène.

De préférence, le monomère A est choisi parmi les vinylaromatiques, le monomère B est choisi parmi les méthacrylates. Des exemples spécifiques sont:

- $PS/PMMA^-$,
- $PS/PtBuA^-$,
- $PtBuA/PMMA^-$,
- $P4VP/PMMA^-$,
- $PMMA/PtBuA^-$.

Similairement, selon un troisième mode de réalisation de la présente invention, le procédé comprend les étapes de:

(i)

(a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur monofonctionnel et au moins un ligand conduisant au polymère vivant $(A)_a^-$, a ≤ 5000;

(b) réaction dudit $(A)_a^-$ vivant avec un monomère B différent de A, choisi dans le groupe consistant en les monomères (meth)acryliques, vinylaromatiques, diéniques, vinylpyridines, oxydes d'alkylène, lactames, lactones et maléimides, en présence d'au moins un ligand tel que défini ci-dessus, conduisant au copolymère $(A)_a$-$(B)_b^-$, b ≤ 5000;

(c) réaction dudit $(A)_a$-$(B)_b^-$ vivant avec un monomère C (meth)acrylique différent de B, en présence d'au moins un ligand tel que défini ci-dessus, conduisant au copolymère triséquencé vivant $(A)_a$-$(B)_b$-$(C)_c^-$, c ≤ 5000;

(ii) réaction dudit $(A)_a$-$(B)_b$-$(C)_c^-$ vivant avec un composé aldéhyde de formule $R(CHO)_r$ avec r ≥ 2; et

(iii) récupération du polycondensat final par des moyens connus en eux-mêmes.

Les avantages sont substantiellement identiques à ceux obtenus pour les homopolymères et les polymères biséquencés.

Les poids moléculaires des séquences $(A)_a$, $(B)_b$ et $(C)_c$ sont compris entre 1/500/500 et 500/1/1, de préférence 1/100/100 et 100/1/1. Les monomères A, B et C peuvent être présents, en poids, selon un rapport pondéral $(A)_a/(B)_b/C_{(c)}$ compris entre 1/500/500 et 500/1/1, de préférence 1/100/100 et 100/1/1.

Le polymère vivant $(A)_a$-$(B)_b$-$(C)_c^-$ peut être, par exemple:

- méthacrylique/acrylique/méthacrylique,
- vinylaromatique/acrylique/méthacrylique,
- diénique/acrylique/méthacrylique,
- vinylaromatique/méthacrylique/acrylique,
- acrylique/méthacrylique/acrylique,
- vinylaromatique/diénique/(meth)acrylique,
- diénique/vinylaromatique/(meth)acrylique.

De préférence, le polymère A est choisi parmi les vinylaromatiques, le monomère B parmi les vinylpyridines, le monomère C parmi les méthacrylates.

Des exemples spécifiques sont:

- PS/P2VP/PMMA$^-$,
- PS/PtBuA/PMMA$^-$,
- PMMA/PtBuA/PMMA$^-$ ,
- PtBuA/PMMA/PtBuA$^-$,
- PS/PMMA/PtBuA$^-$,
- PS/PBut/PMMA$^-$,
- PBut/PS/PMMA$^-$.

La présente invention n'est pas limitée à un polymère triséquencé, et s'applique en fait à tout polymère multiséquencé dont la formule générale $P^-$ peut être développée

$$(A)_a\text{-}(B)_b\text{-}(C)_c\text{-}...\text{-}(K)_k\text{-}...$$

chacun des monomères A, B, C, ..., K, ... étant deux à deux consécutivement différents et chacun des entiers a, b, c, ..., k, ... étant compris entre 0 et 5 000.

Selon un quatrième mode de réalisation de la présente invention, ce procédé comprend les étapes de:

(i)

(a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur monofonctionnel et au moins un ligand conduisant au polymère vivant $(A)_a^-$, $a \leq 5000$;

(b) réaction dudit $(A)_a^-$ vivant avec un monomère B différent de A, choisi dans le groupe consistant en les monomères (meth)acryliques, vinylaromatiques, diéniques, vinylpyridines, oxydes d'alkylène, lactames, lactones et maléimides, en présence d'au moins un ligand tel que défini ci-dessus, conduisant au copolymère $(A)_a$-$(B)_b^-$, $b \leq 5000$;

(c) réaction dudit $(A)_a$-$(B)_b^-$ vivant avec un monomère C différent de B, choisi dans le groupe consistant en les monomères (meth)acryliques, vinylaromatiques, diéniques, vinylpyridines, oxydes d'alkylène, lactames, lactones et maléimides, en présence d'au moins un ligand tel que défini ci-dessus, conduisant au copolymère triséquencé vivant $(A)_a$-$(B)_b$-$(C)_c^-$, $c \leq 5000$;

.

.

(k) réaction dudit $(A)_a$-$(B)_b$-$(C)_c$-...-$(J)_j^-$ avec un monomère K différent de J, choisi dans le groupe consistant en les monomères (meth)acryliques, vinylaromatiques, diéniques, vinylpyridines, oxydes d'alkylène, lactames, lactones et maléimides, en présence d'au moins un ligand tel que défini ci-dessus, conduisant au polymère multiséquencé vivant $(A)_a$-$(B)_b$-$(C)_c$-...-$(K)_k^-$, $k \leq 5000$;

.
.
.
ultime réaction du polymère vivant obtenu à l'étape précédente avec un monomère (meth)acrylique en présence d'au moins un ligand conduisant à un polymère vivant $P^-$ ; et

(ii) réaction dudit polymère $P^-$ avec un composé aldéhyde de formule $R(CHO)_r$ avec $r \geq 2$; et
(iii) récupération du polycondensat final par des moyens connus en eux-mêmes.

Selon un cinquième mode de réalisation de la présente invention, le procédé comprend les étapes de:

(i)
(a) polymérisation anionique d'un monomère A (meth)acrylique, à l'aide d'un système initiateur constitué par au moins un amorceur bifonctionnel et au moins un ligand conduisant au polymère vivant $^-(A)_a^-$, $a \leq 5000$;
(ii) réaction dudit polymère vivant $^-(A)_a^-$ avec un di- ou multi-aldéhyde; et
(iii) récupération du polycondensat final par des moyens connus en eux-mêmes.

De même que dans le cas des polymères vivants $(A)_a^-$, le polycondensat final a un poids moléculaire substantiellement plus élevé. Dans le cas d'une réaction avec un multi-aldéhyde, le polycondensat final a par contre une structure de réseau.

Le polymère vivant $^-(A)_a^-$ a un poids moléculaire moyen de (1 000) à (500 000), de préférence de (2 000) à (300 000). Le polymère vivant $^-(A)_a^-$ peut être:

- acrylique, de préférence polytert-butylacrylate ($^-$PtBuA$^-$);
- méthacrylique, de préférence polyméthylméthacrylate ($^-$PMMA$^-$ ).

Selon un sixième mode de réalisation de la présente invention, le procédé comprend les étapes de:

(i)

(a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur bifonctionnel et au moins un ligand conduisant au polymère vivant $^-(A)_a^-$, $a \leq 5000$;
(b) réaction dudit $^-(A)_a^-$ avec un monomère B (meth)acrylique différent de A, en présence d'au moins un ligand tel que défini ci-dessus, conduisant au polymère triséquencé symétrique $^-(B)_b-(A)_a-(B)_b^-$, $b \leq 5000$;

(ii) réaction dudit $^-(B)_b-(A)_a-(B)_b^-$ vivant avec un composé aldéhyde de formule $R(CHO)_r$; et
(iii) récupération du polycondensat final par des moyens connus en eux-mêmes.

Les avantages sont substantiellement identiques à ceux obtenus dans les cas précédents, en ce qui concerne l'augmentation du poids moléculaire, etc.

Une application d'intérêt est le couplage avec un dialdéhyde. L'étape (i) est mise en oeuvre de façon à obtenir un polymère vivant $^-P^-$ de formule:

$$^-(B)_{b/2}-(A)_a-(B)_{b/2}^-$$

Ce polymère vivant réagit avec le di-aldéhyde pour conduire à un polymère bi-séquencé:

$$...-(B)_{b/2}-R-(B)_{b/2}-(A)_a-(B)_{b/2}-R-(B)_{b/2}-(A)_a-(B)_{b/2}-R-(B)_{b/2}-...$$

soit, en considérant R négligeable devant $(B)_b$, à un biséquencé: $[(A)_a-(B)_b]_x$ d'un poids moléculaire élevé.

Les poids moléculaires des séquences $(A)_a$ et $(B)_b$ sont compris entre 1 000 et 500 000, de préférence 2 000 et 300 000.
Les monomères A et B peuvent être présents, en poids, selon des rapports $(B)_b/(A)_a/(B)_b$ de 49/2/49 à 1/98/1, de préférence 45/10/45 à 5/90/5.

Le polymère vivant $(B)_b$-$(A)_a$-$(B)_b^-$ peut être, par exemple:

- méthacrylique/acrylique/méthacrylique,
- (méth)acrylique/vinylaromatique/(méth)acrylique,
- (meth)acrylique/diénique/(meth)acrylique,
- acrylique/méthacrylique/acrylique.

De préférence, le monomère A est choisi parmi les vinylaromatiques, le monomère B est choisi parmi les (meth) acrylates. Des exemples spécifiques sont:

- $^-$PMMA/PS/PMMA$^-$,
- PtBuA/PS/PtBuA$^-$,
- $^-$PMMA/PtBuA/PMMA$^-$,
- $^-$PtBuA/PMMA/PtBuA$^-$,
- $^-$PMMA/PBut/PMMA$^-$.

Selon un septième autre mode de réalisation de la présente invention, le procédé comprend les étapes de:

(i)

(a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur bifonctionnel et au moins un ligand conduisant au polymère vivant $^-(A)_a^-$, $a \leq 5000$;
(b) réaction dudit $^-(A)_a^-$ avec un monomère B différent de A, choisi parmi le groupe consistant en les monomères (meth)acryliques, vinylaromatiques, diéniques, vinylpyridines, oxydes d'alkylène, lactames, lactones et maléimides, en présence d'au moins un ligand conduisant au polymère vivant $^-(B)_b$-$(A)_a$-$(B)_b^-$, $b \leq 5000$;
(c) réaction dudit $^-(B)_b$-$(A)_a$-$(B)_b^-$ avec un monomère C (meth)acrylique différent de B, en présence d'au moins un ligand conduisant au polymère vivant $^-(C)_c$-$(B)_b$-$(A)_a$-$(B)_b$-$(C)_c^-$, $c \leq 5000$;

(ii) réaction de ce polymère vivant avec un composé aldéhyde de formule $R(CHO)_r$, $r \geq 2$; et
(iii) récupération du polycondensat final par des moyens connus en eux-mêmes.

Similairement, avec un dialdéhyde, le polycondensat final est un multiséquencé de formule $[(C)_c$-$(B)_b$-$(A)_a$-$(B)_b$-$(C)_c]_x$.

Avantageusement, le monomère A est choisi parmi les vinylaromatiques, le monomère B est choisi parmi les vinylpyridines, le monomère C est choisi parmi les (meth)acrylates. Les poids moléculaires des séquences $(A)_a$, $(B)_b$ et $(C)_c$ sont compris entre 1 000 et 500 000, de préférence entre 2 000 et 300 000.

La présente invention n'est pas limitée à un polymère symétrique ayant 3 blocs, et s'applique en fait à tout polymère multiséquencé dont la formule générale $^-P^-$ peut être développée en:

$$...\text{-}(K)_k\text{-}...\text{-}(B)_b\text{-}(A)_a\text{-}(B)_b\text{-}...\text{-}(K)_k\text{-}...$$

chacun des monomères A, B, ..., K, ... étant deux à deux consécutivement différents et chacun des entiers a, b, ..., k, ... étant inférieurs à 5 000.

Selon un huitième mode de réalisation de la présente invention, le procédé comprend les étapes de:

(i)

(a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur bifonctionnel et au moins un ligand conduisant au polymère vivant $^-(A)_a^-$, $a \leq 5000$;
(b) réaction dudit $^-(A)_a^-$ avec un monomère B différent de A, choisi parmi le groupe consistant en les monomères (meth)acryliques, vinylaromatiques, diéniques, vinylpyridines, oxydes d'alkylène, lactames, lactones et maléimides, en présence d'au moins un ligand conduisant au polymère vivant $^-(B)_b$-$(A)_a$-$(B)_b^-$, $b \leq 5000$; . .
(k) réaction dudit $^-(J)_j$-$(B)_b$-$(A)_a$-$(B)_b$-...-$(J)_j^-$ avec un monomère K différent de J, choisi parmi le groupe consistant en les monomères (meth)acryliques, vinylaromatiques, diéniques, vinylpyridines, oxydes d'alkylène,

lactames, lactones et maléimides, en présence d'au moins un ligand conduisant au polymère vivant symétrique $^{-}(K)_k$-...-$(A)_a$-...-$(K)_k^{-}$

.

.

.

ultime réaction du polymère vivant obtenu à l'étape précédente avec un monomère (meth)acrylique en présence d'au moins un ligand conduisant à un polymère vivant $^{-}P^{-}$; et

(ii) réaction dudit polymère vivant $^{-}P^{-}$ avec un composé aldéhyde de formule $R(CHO)_r$, $r \geq 2$; et
(iii) récupération du polycondensat final par des moyens connus en eux-mêmes.

Selon le polycondensat final recherché, le composé aldéhyde est un di- ou un multi-aldéhyde.

Les polymères vivants susceptibles d'être utilisés dans le procédé selon la présente invention sont donc nombreux et divers. Ils peuvent être des homopolymères de (meth)acrylates, des copolymères bi- ou tri-séquencés. Les polymères tri-séquencés peuvent être constitués de blocs A, B et C tous trois différents ou dont les unités des blocs A et C sont identiques, B étant différent de A. Dans ce dernier cas, les blocs peuvent être de poids moléculaires identiques (le polymère triséquencé est symétrique) ou de poids moléculaires différents, selon le procédé de polymérisation (i) utilisé.

Le groupe R portant les fonctions aldéhydes peut être un groupe alkyle, cycloalkyle, aryle, aralkyle, contenant de 2 à 24 atomes de carbone, non-substitués ou substitués par un ou plusieurs substituants choisi(s) dans le groupe consistant en: alkyle en $C_{1-6}$, alkoxy en $C_{1-6}$ ou dialkyl($C_{1-6}$)amino, halogéno, trifluorométhyle, et autres.

Le groupe R portant les fonctions aldéhydes est de préférence un groupe aryl, non-substitué ou substitué par 1 à 4 groupes choisis parmi alkyles en $C_{1-4}$, trifluorométhyle, halogéno. Des exemples de composés aldéhydes sont: le 1,6-naphtalaldéhyde, l'isophtalaldéhyde, le térephtalaldéhyde, le 1,3,5-triformylbenzène. Les composés aldéhydes particulièrement préférés sont le térephtalaldéhyde et le 1,3,5-triformylbenzène.

Les étapes (i) et (ii) du procédé sont conduites en fonction des monomères et réactifs ajoutés et du type de polycondensat final recherché.

Selon un mode de réalisation du procédé de la présente invention, les réactions des étapes (i) et (ii) sont mises en oeuvre en présence d'au moins un solvant choisi, de préférence, parmi les solvants aromatiques, tels que le benzène, le toluène, ou des solvants tels que le tétrahydrofuranne (THF), le diglyme, le tétraglyme, l'orthoterphényle, le biphényle, la décaline, la tétraline ou le diméthylformamide. Les solvants préférés sont le THF ou le toluène.

La température des réactions des étapes (i) et (ii) peut varier entre environ -100°C et 60°C, de préférence entre environ -80°C et 20°C.

Selon un mode de réalisation, les réactions des étapes (i) et (ii) du procédé selon l'invention s'effectuent en l'absence d'oxygène et d'eau, en milieu anhydre et aprotique.

La quantité de di- ou multi-aldéhyde introduite est telle que les rapports molaires aldéhyde/amorceur monofonctionnel et aldéhyde/amorceur bifonctionnel sont compris, respectivement, dans les intervalles (0,2)-(10) et (0,2)-(10). De préférence, les intervalles sont respectivement (0,5)-(1) et (0,5)-(2). Plus avantageusement, la quantité de composé aldéhyde introduite est substantiellement stoechiométrique par rapport à l'amorceur mono- ou bi-fonctionnel. Selon ce mode de réalisation, la quantité molaire de fonction aldéhyde est substantiellement égale à celle d'amorceur monofonctionnel, substantiellement double de celle d'amorceur bifonctionnel.

Dans l'étape de polymérisation (i) du procédé selon l'invention, la proportion de ligand utilisé peut varier fortement par rapport à l'amorceur mono- ou bi-fonctionnel. Cette quantité peut être, par exemple, largement excédentaire par rapport à la quantité molaire d'agent amorceur. Cette quantité peut aussi être égale ou inférieure à la quantité molaire d'agent amorceur. Celle-ci est au moins égale à 0,3 et allant jusqu'à 50 environ.De préférence, le ligand est introduit dans une proportion 5 fois molaire vis-à-vis de l'amorceur.

L'amorceur monofonctionnel utilisé dans la première étape (i) de polymérisation du procédé peut être choisi notamment parmi les composés de formule:

$$R'\text{-}M$$

dans laquelle:

M désigne un métal alcalin ou alcalino-terreux dont la valence est de 1; et
R' désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle;

et les composés de formule:

$$(C_6H_5)_2CHM'$$

dans laquelle:

M' est choisi parmi le lithium, le sodium et le potassium.

De tels amorceurs monofonctionnels sont, par exemple, le sec.-butyllithium, le n-butyllithium, le fluorényllithium, l'alphaméthylstyryllithium, le 1,1-diphénylhexyllithium (DPHLi), le diphénylméthyl-lithium ou -sodium ou -potassium et le 1,1-diphényl-3-méthylpentyllithium.

L'amorceur monofonctionnel préféré est le DPHLi.

L'amorceur bifonctionnel utilisé dans la première étape (i) de polymérisation du procédé peut être choisi notamment parmi les composés de formule:

$$(R')_2\text{-}M$$

dans laquelle:

M désigne un métal alcalin ou alcalino-terreux dont la valence est 2; et

R' désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle;

et les composés de formule:

$$(C_{10}H_6)M'_2$$

dans laquelle:

M' est choisi parmi le lithium, le sodium et le potassium.

L'amorceur bifonctionnel peut être choisi notamment parmi des composés tels que le 1,1,4,4-tétraphényl-1,4-dilithio-butane (TPDLB), le 1,1,4,4-tétraphényl-1,4-disodiobutane, le naphtalène lithium, le naphtalène sodium, le naphtalène potassium et leurs homologues.

Les amorceurs bifonctionnels préférés sont le TPDLB et le naphtalène lithium.

Le ligand peut être choisi parmi, d'une part, les sels minéraux de métaux alcalins ou alcalino-terreux, par exemple, les chlorures, fluorures, bromures, iodures, borures, sulfates, nitrates et borates, et, d'autre part, les sels organiques de métaux alcalins, par exemple, les alcoolates, les esters d'acide carboxylique substitué en position alpha par ledit métal et les sels dans lesquels ledit métal alcalin est associé à un groupe tel que:

(A) les groupes de formule:

$$-O-\underset{\underset{O}{\|}}{C}-R_1 \qquad (II)$$

dans laquelle $R_1$ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone;

(B) les groupes de formule:

$$-O-\underset{\underset{O}{\|}}{C}-(-CYZ-)_nCH_mX_{3-m} \qquad (III)$$

dans laquelle:

- Y et Z, identiques ou différents l'un de l'autre, sont choisis parmi l'atome d'hydrogène et les atomes d'halogène;
- n est un nombre entier allant de 0 à 4;
- X est un atome d'halogène; et
- m est un nombre entier allant de 0 à 2;

(C) les groupes de formule:

$$-O-SO_2-CT_3 \qquad (IV)$$

dans laquelle:

T est choisi parmi l'atome d'hydrogène et les atomes d'halogène; et

(D) les groupes de formule:

$$-B(R_2)_4 \qquad (V)$$

dans laquelle:

$R_2$ est choisi parmi l'atome d'hydrogène et les radicaux alkyle et aryle.

Des exemples de groupes de formule (II) sont les groupes acétate, propionate et benzoate. Des exemples de groupes de formule (III) sont les groupes α-bromoacétate et trifluoroacétate. Des exemples de groupes de formule (IV) sont les groupes trifluorométhanesulfonique et méthanesulfonique. Des exemples de groupes (V) sont les groupes borohydrure et tétraphénylborure.

Le ligand peut être également constitué par un agent complexant macrocyclique non azoté, choisi notamment parmi les polyéthers cycliques (encore dénommés éthers-couronne) et les polythioéthers cycliques, tels que notamment des polyéthers macrocycliques dont l'anneau macrocyclique contient au moins 14 atomes de carbone et d'oxygène, chaque atome d'oxygène de l'anneau étant séparé des autres atomes d'oxygène de l'anneau par deux ou trois atomes de carbone; de tels polyéthers macrocycliques ont déjà été décrits dans les brevets US-A-3 687 978 et US-A-4 826 941.

De tels ligands sont décrits dans la demande FR-901724.

Le ligand préféré est LiCl et ceux de la demande FR précitée.

Le polycondensat final est récupéré par séparation du milieu réactionnel selon des techniques connues de l'homme de l'art.

De préférence, le polycondensat est séparé par précipitation dans un solvant ou mélange de solvants, tel que: heptane, méthanol, méthanol/eau. Plus avantageusement, la séparation est une précipitation dans un mélange froid méthanol/eau.

Après l'étape de couplage (ii), il peut se former un gel physique résultant des associations entre fonctions alcoolate, caractérisé par une augmentation de la viscosité.

Selon un mode de réalisation de la présente invention, la quantité totale du composé aldéhyde est ajoutée avant la gélification du milieu. Selon un autre mode de réalisation de la présente invention, le composé aldéhyde est introduit goutte-à-goutte.

Selon un mode de réalisation préféré de l'invention, le milieu est acidifié avant la séparation (par précipitation). L'agent d'acidification est n'importe quel acide, par exemple: acide chlorhydrique, sulfurique, acétique, para- ou méthane-toluènesulfonique, dans un solvant, si nécessaire, par exemple de l'eau, du THF, du toluène, du méthanol, de préférence du méthanol ou du THF.

Selon une variante de la présente invention, les blocs représentant une séquence d'un monomère acrylique et/ou méthacrylique, tel que précédemment défini, peuvent être hydrolysés, totalement ou partiellement, en une séquence

de l'acide acrylique et/ou méthacrylique correspondant et ladite séquence peut le cas échéant être ultérieurement saponifiée, totalement ou partiellement, avec un sel d'un métal alcalin ou alcalino-terreux, en une séquence de l'acrylate et/ou du méthacrylate alcalin ou alcalino-terreux correspondant.

Selon une autre variante de la présente invention, les blocs représentant une séquence d'un monomère acrylique et/ou méthacrylique, tel que précédemment défini, peuvent être transestérifiés en une séquence d'un autre monomère acrylique et/ou méthacrylique, par exemple, de façon à remplacer un (meth)acrylate tertiaire ou secondaire par un acrylate primaire, ou vice-versa.

La présente invention a aussi pour objet les polycondensats obtenus par le présent procédé.

Les exemples ci-après sont illustratifs de la présente invention et ne doivent pas être considérés comme limitatifs de celle-ci.

EXEMPLE 1

Polycondensat obtenu par réaction d'un poly(t-BuA) "vivant" monofonctionnel avec le térephtaldéhyde

. Caractéristique du poly(t-BuA)
"précurseur" monofonctionnel $\overline{M}n$ = 12 000 g/mole

Dans 300 ml de THF anhydre contenant 0,7 g de LiCl ($1,65.10^{-2}$ moles) préalablement séché sous vide, sont introduits 12,5 ml d'une solution de diphénylhexyllithium dans le THF à la concentration de $0,12.10^{-3}$ moles/ml, soit $1,5.10^{-3}$ mole. Le milieu est porté à -80°C. 18 g d'acrylate de tert-butyle en solution dans le THF sont ensuite introduits dans le milieu réactionnel goutte à goutte. Au terme de la polymérisation du monomère, le térephtaldéhyde (0,1 g soit $7,5.10^{-4}$ moles) en solution dans le THF -à raison de 0,1 g dans 40 ml de THF- est ajouté. Le milieu est ensuite porté à température ambiante; avant sa précipitation à froid par un mélange méthanol-eau (90/10), le polymère est neutralisé par addition de méthanol acide. La masse molaire en nombre de l'échantillon obtenu est $\overline{M}n$ = 21 500 g/mole.

EXEMPLE 2

Polycondensat obtenu par réaction d'un poly(t-BuA) "vivant" difonctionnel avec le térephtaldéhyde

. Caractéristique du poly(t-BuA)
"précurseur" di-anionique $\overline{M}n$ = 15 000 g/mole

Dans 300 ml de THF anhydre contenant 0,7 g de LiCl ($1,65.10^{-2}$ moles) préalablement séché sous vide, sont introduits 3,4 ml d'une solution de 1,1,4,4-tétraphényldilithiobutane dans le THF à $0,44.10^{-3}$ moles/ml, soit $1,5.10^{-3}$ mole d'espèces actives carbanioniques. Le milieu est porté à -80°C. 11,3 g d'acrylate de tert-butyle en solution dans le THF sont ensuite lentement ajoutés. Au terme de l'addition du monomère et de sa polymérisation, le térephtaldéhyde (0,1 g soit $7,5.10^{-4}$ moles) est introduit goutte à goutte dans le milieu réactionnel. Cet agent de couplage (0,1 g dans 40 ml de THF) induit la gélification du milieu au cours de son addition. Le milieu est ensuite porté à l'ambiante; le polymère est neutralisé par addition de méthanol acide puis précipité à froid par un mélange méthanol-eau (90/10). La masse molaire en nombre du polycondensat obtenu est $\overline{M}n$ = 50 000 g/mole.

EXEMPLE 3

Synthèse d'un P(t-BuA) à structure en étoile obtenu par réaction d'un poly(t-BuA) "vivant" avec le 1,3,5-triformylbenzène [$C_6H_3(1,3,5)(CHO)_3$]

. caractéristiques du polymère
synthétisé $\overline{M}n$ = 10 500 g/mole

Dans 300 ml de THF anhydre contenant 1,40 g de LiCl ($3,3.10^{-2}$ moles) préalablement séché sous vide, sont introduits 24 ml d'une solution de diphénylhexyllithium dans le THF à la concentration de $0,12.10^{-3}$ mole/ml, soit $2,85.10^{-3}$ moles. Le milieu est porté à -80°C; 10 g d'acrylate de tert-butyle ($7,8.10^{-2}$ moles) en solution dans le THF sont ensuite introduits dans le milieu réactionnel.

Au terme de la polymérisation du monomère, le triformylbenzène -en solution dans le THF- est ajouté. La quantité de triformylbenzène introduite est de 0,154 g, soit $9,5.10^{-4}$ moles, ce qui correspond à la stoechiométrie. Le milieu réactionnel est ensuite porté à température ambiante; avant sa précipitation dans le mélange froid méthanol-eau (90/10), le polymère est neutralisé par addition de méthanol acide.

EXEMPLE 4

Synthèse d'un copolymère triséquencé P(MMA)-P(tBuA)-P(MMA) obtenu par couplage d'un copolymère P(MMA)-P(tBuA) "vivant" avec le térephtaldéhyde

- caractéristique du copolymère
  "précurseur" P(MMA)-P(tBuA) $\overline{M}n$ = 7 000 g/mole
- caractéristique du copolymère triséquencé obtenu
  P(MMA)-P(tBuA)-P(MMA) $\overline{M}n$ = 14 000 g/mole

Dans 300 ml de THF contenant 1,4 g de LiCl ($3,3.10^{-3}$ moles) préalablement séché sous vide, sont introduits 24 ml d'une solution de diphénylhexyllithium dans le THF à la concentration de $0,12.10^{-3}$ moles/ml, soit $2,85.10^{-3}$ moles. Le milieu est porté à -80°C; 10 g de méthacrylate de méthyle (0,1 mole) en solution dans le THF sont ensuite introduits dans le milieu réactionnel. Puis 10 g d'acrylate de tert-butyle ($7,8.10^{-2}$ moles) en solution dans le THF sont ensuite ajoutés goutte à goutte. Au terme de la polymérisation de ce monomère, une quantité stoechiométrique de térephtaldéhyde en solution dans le THF est ajouté, soit 0,19 g ($1,42.10^{-3}$ moles). Le térephtalaldéhyde est en solution dans le THF à raison de 0,1 g dans 40 ml de THF. Le milieu est ensuite porté à température ambiante; avant sa précipitation à froid par un mélange méthanol-eau (90/10), le polymère est neutralisé par addition de méthanol acide.

EXEMPLE 5

Synthèse d'un copolymère multiséquencé de structure $[$PtBuA-PS-PtBuA$]_n$

- Caractéristiques du copolymère "précurseur": $\overline{M}n$ de la séquence centrale (PS) = 20 000 g/mole; $\overline{M}n$ des séquences externes (PtBuA) = 7 000 g/mole (chacune)

  Dans 300 ml de THF anhydre contenant 0,7 g de LiCl ($1,65.10^{-2}$ moles), préalablement séché sous vide, est introduit 0,8 ml d'une solution de naphtalènelithium dans le THF à $0,87.10^{-3}$ moles/ml, soit $0,7.10^{-3}$ moles. Le milieu est porté à -90°C. 7 g de styrène ($6,71.10^{-2}$ moles) fraîchement distillé et dilué dans du THF sont ensuite ajoutés goutte à goutte. On observe une rapide disparition de la couleur verte caractéristique du naphtalènelithium au profit de la couleur rouge propre aux carbanions styryl. A la fin de l'addition du styrène, est introduit 0,2 g ($1,1.10^{-3}$ moles) de 1,1-diphényléthylène. Au terme de cette étape, l'acrylate de tert-butyle (5 g en solution dans 40 ml de THF) est ajouté dans le milieu réactionnel. Le milieu s'éclaircit rapidement. Le térephtaldéhyde ($0,46.10^{-2}$ g, soit $3,48.10^{-4}$ moles) en solution dans le THF est ensuite additionné -18,6 ml d'une solution de 40 ml de THF contenant 0,1 g de térephtaldéhyde-. La viscosité du milieu réactionnel augmente rapidement. La quantité stoechiométrique de térephtalaldéhyde doit être introduite avant que le milieu ne gélifie. La température du milieu réactionnel est portée à l'ambiante; l'introduction de méthanol acide détruit le gel physique résultant des associations entre fonctions alcoolate et rend le milieu parfaitement soluble. Le copolymère est recueilli par précipitation à froid par un mélange méthanol-eau (90/10). La masse molaire en nombre du copolymère multiséquencé est égale à $\overline{M}n$ = 125 000 g/mole.

EXEMPLE 6

Synthèse d'un copolymère multiséquencé de structure $[$PtBuA-PMMA-PtBuA$]$

- Caractéristiques du copolymère "précurseur": $\overline{M}n$ de la séquence (PMMA) = 8 000 g/mole; $\overline{M}n$ des séquences externes = 9 000 g/mole (chacune)

  Dans 300 ml de THF anhydre contenant 0,7 g de LiCl ($1,65.10^{-2}$ moles), préalablement séché sous vide, est introduit 3,4 ml d'une solution de 1,1,4,4-tétraphényldilithiobutane dans le THF à $0,44.10^{-3}$ moles/ml, soit $1,5.10^{-3}$ moles d'espèces actives carbanioniques. Le milieu est porté à -80°C. 6 g de méthacrylate de méthyle ($6.10^{-2}$ moles) fraîchement distillé et dilué dans du THF sont ensuite ajoutés goutte à goutte. On observe une rapide disparition de la couleur rouge caractéristique du carbanion du diphényléthylène. A la fin de l'addition du MMA, l'acrylate de t-butyle (13,5 g soit $0.10^{-5}$ moles) est introduit. Au terme de cette étape, le térephtalaldéhyde (0,1 g soit $7,5.10^{-4}$ moles) est ajouté. Cet agent de couplage est en solution dans le THF (0,4 g dans 40 ml de THF). Les mêmes phénomènes (augmentation de la viscosité et gélification du milieu) que ceux décrits dans le précédent exemples sont observés. Après avoir porté le milieu réactionnel à l'ambiante et acidifié le milieu, on récupère le copolymère par précipitation à froid par un mélange méthanol-eau (90/10). La masse molaire en nombre du copolymère multiséquencé obtenu est égale à $\overline{M}n$ = 110 000 g/mole.

## Revendications

1. Polycondensat susceptible d'être obtenu par le procédé de couplage d'un polymère vivant contenant des unités (meth)acryliques terminales vivantes qui comprend les étapes de:

    (i) polymérisation anionique à l'aide d'un système initiateur constitué par un amorceur fonctionnel et un ligand afin d'obtenir un polymère vivant contenant des unités (meth)acryliques terminales vivantes;
    (ii) réaction avec un composé aldéhyde de formule:

    $$R\text{-}(CHO)_r$$

    dans laquelle r ≥ 2; et le groupe R portant les fonctions aldéhyde est un groupe alkyle, cycloalkyle, aryle, aralkyle, contenant de 2 à 24 atomes de carbone, non-substitué ou substitué par un ou plusieurs substituants choisi(s) dans le groupe consistant en: alkyle en $C_{1-6}$, alkoxy en $C_{1-6}$ ou dialkyl($C_{1-6}$)amino, halogéno, trifluorométhyle;
    (iii) récupération du polycondensat final par des moyens connus en eux-mêmes.

2. Polycondensat selon la revendication 1, susceptible d'être obtenu par le procédé caractérisé en ce que ledit polymère est constitué d'unités monomères choisies dans le groupe consistant en les monomères acryliques, méthacryliques, vinylaromatiques, diéniques, vinylpyridines, oxydes d'alkylène, lactames, lactones et maléimides.

3. Polycondensat selon la revendication 1 ou 2, susceptible d'être obtenu par le procédé caractérisé en ce que l'étape (i) consiste en:

    (i)

    (a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur monofonctionnel et au moins un ligand conduisant au polymère vivant $(A)_a^-$, a ≤ 5 000; éventuellement
    (b) réaction dudit $(A)_a^-$ vivant avec un monomère B différent de A, choisi dans le groupe consistant en les monomères (meth)acryliques, vinylaromatiques, diéniques, vinylpyridines, oxydes d'alkylène, lactames, lactones et maléimides, en présence d'au moins un ligand tel que défini ci-dessus, conduisant au copolymère $(A)_a\text{-}(B)_b^-$, b ≤ 5 000; éventuellement
    (c) réaction dudit $(A)_a\text{-}(B)_b^-$ vivant avec un monomère C différent de B, choisi dans le groupe consistant en les monomères (meth)acryliques, vinylaromatiques, diéniques, vinylpyridines, oxydes d'alkylène, lactames, lactones et maléimides,en présence d'au moins un ligand tel que défini ci-dessus, conduisant au copolymère triséquencé vivant $(A)_a\text{-}(B)_b\text{-}(C)_c^-$ , c ≤ 5 000; éventuellement
    .
    .
    .
    (k) réaction dudit $(A)_a\text{-}(B)_b\text{-}(C)_c\text{-}...\text{-}(J)_j^-$ avec un monomère K différent de J, choisi dans le groupe consistant en les monomères (meth)acryliques, vinylaromatiques, diéniques, vinylpyridines, oxydes d'alkylène, lactames, lactones et maléimides, en présence d'au moins un ligand tel que défini ci-dessus, conduisant au polymère multiséquencé vivant $(A)_a\text{-}(B)_b\text{-}(C)_c\text{-}...\text{-}(K)_k^-$,
    k ≤ 5 000; éventuellement
    .
    .
    .
    ultime réaction du polymère vivant obtenu à l'étape précédente avec un monomère (meth)acrylique en présence d'au moins un ligand conduisant à un polymère vivant $P^-$.

4. Polycondensat selon la revendication 1 ou 2, susceptible d'être obtenu par le procédé caractérisé en ce que l'étape (i) consiste en:

    (i)

(a) polymérisation anionique d'un monomère A choisi parmi le groupe consistant en les monomères (meth) acryliques, vinylaromatiques, diéniques, vinylpyridines, oxydes d'alkylène, lactames, lactones et maléimides, à l'aide d'un système initiateur constitué par au moins un amorceur bifonctionnel et au moins un ligand conduisant au polymère vivant $^{-}(A)_a^{-}$, a ≤ 5 000; éventuellement

(b) réaction dudit $^{-}(A)_a^{-}$ avec un monomère B différent de A, choisi parmi le groupe consistant en les monomères (meth)acryliques, vinylaromatiques, diéniques, vinylpyridines, oxydes d'alkylène, lactames, lactones et maléimides, en présence d'au moins un ligand conduisant au polymère vivant $^{-}(B)_b$-$(A)_a$-$(B)_b^{-}$, b ≤ 5 000; éventuellement

.

.

.

(k) réaction dudit $^{-}(J)_j$-$(B)_b$-$(A)_a$-$(B)_b$-...-$(J)_j^{-}$ avec un monomère K différent de J, choisi parmi le groupe consistant en les monomères (meth)acryliques, vinylaromatiques, diéniques, vinylpyridines, oxydes d'alkylène, lactames, lactones et maléimides, en présence d'au moins un ligand conduisant au polymère vivant symétrique $^{-}(K)_k$-...-$(A)_a$-...-$(K)_k^{-}$
k ≤ 5 000; éventuellement

.

.

.

ultime réaction du polymère vivant obtenu à l'étape précédente avec un monomère (meth)acrylique en présence d'au moins un ligand conduisant à un polymère vivant $^{-}P^{-}$.

**5.** Polycondensat selon la revendication 3 ou 4, susceptible d'être obtenu par le procédé caractérisé en ce que l'étape (i) est mise en oeuvre avec les monomères A, B et C.

**6.** Polycondensat selon la revendication 5, susceptible d'être obtenu par le procédé caractérisé en ce que le monomère A est choisi parmi les vinylaromatiques, le monomère B parmi les vinylpyridines, le monomère C parmi les (méth)acrylates.

**7.** Polycondensat selon la revendication 3 ou 4, susceptible d'être obtenu par le procédé caractérisé en ce que l'étape (i) est mise en oeuvre avec les monomères A et B.

**8.** Polycondensat selon la revendication 7, susceptible d'être obtenu par le procédé caractérisé en ce que le monomère A est choisi parmi les vinylaromatiques, le monomère B parmi les (méth)acrylates.

**9.** Polycondensat selon la revendication 3 ou 4, susceptible d'être obtenu par le procédé caractérisé en ce que l'étape (i) est mise en oeuvre avec le monomère A.

**10.** Polycondensat selon la revendication 9, susceptible d'être obtenu par le procédé caractérisé en ce que le monomère A est le méthacrylate de méthyle ou l'acrylate de tert-butyle.

**11.** Polycondensat selon l'une quelconque des revendications 3 à 10, susceptible d'être obtenu par le procédé caractérisé en ce que les poids moléculaires des séquences $(A)_a$, éventuellement $(B)_b$, éventuellement $(C)_c$ et éventuellement autre, lorsqu'ils sont présents, sont compris entre 1 000 et 500 000, de préférence entre 2000 et 300 000.

**12.** Polycondensat selon la revendication 5 ou 6, susceptible d'être obtenu par le procédé caractérisé en ce que le rapport pondéral des séquences $(A)_a/(B)_b/(C)_c$ est compris entre 1/500/500 et 500/1/1, de préférence 1/100/100 et 100/1/1.

**13.** Polycondensat selon les revendications 7 ou 8 lorsqu'elles sont dépendantes de la revendication 3, susceptible d'être obtenu par le procédé caractérisé en ce que le rapport pondéral des séquences $(A)_a/(B)_b$ est compris entre 1/500 et 500/1, de préférence 1/99 à 99/1.

**14.** Polycondensat selon les revendications 7 ou 8 lorsqu'elles sont dépendantes de la revendication 4, susceptible d'être obtenu par le procédé caractérisé en ce que le rapport pondéral des séquences $(B)_b/(A)_a/(B)_b$ est compris entre 49/2/49 et 1/98/1, de préférence 45/10/45 et 5/90/5.

**15.** Polycondensat selon l'une quelconque des revendications 1 à 14, susceptible d'être obtenu par le procédé caractérisé en ce que le groupe R portant les fonctions aldéhydes est un groupe aryle, non-substitué ou substitué par 1 à 4 groupes choisis parmi les groupes alkyles en $C_{1-4}$, trifluorométhyle, halogéno.

**16.** Polycondensat selon l'une quelconque des revendications 1 à 15, susceptible d'être obtenu par le procédé caractérisé en ce que le composé aldéhyde est difonctionnel, r étant égal à 2.

**17.** Polycondensat selon la revendication 16, susceptible d'être obtenu par le procédé caractérisé en ce que le composé aldéhyde est le térephtalaldéhyde.

**18.** Polycondensat selon l'une quelconque des revendications 1 à 17, susceptible d'être obtenu par le procédé caractérisé en ce que le composé aldéhyde est multifonctionnel, r étant supérieur à 2.

**19.** Polycondensat selon selon la revendication 18, susceptible d'être obtenu par le procédé caractérisé en ce que le composé aldéhyde est le 1,3,5-triformylbenzène.

**20.** Polycondensat selon l'une quelconque des revendications 1 à 19, susceptible d'être obtenu par le procédé caractérisé en ce que la quantité de di- ou multi-aldéhyde introduite est telle que les rapports molaires aldéhyde/amorceur monofonctionnel et aldéhyde/amorceur bifonctionnel sont compris, respectivement, dans les intervalles (0,2)-(10) et (0,2)-(10), de préférence respectivement (0,5)-(1) et (0,5)-(2).

**21.** Polycondensat selon la revendication 20, susceptible d'être obtenu par le procédé caractérisé en ce que la quantité de composé aldéhyde introduite est substantiellement stoechiométrique par rapport à l'amorceur mono- ou bifonctionnel.

**22.** Polycondensat selon l'une quelconque des revendications 1 à 21, susceptible d'être obtenu par le procédé caractérisé en ce que le rapport molaire ligand/amorceur mono-fonctionnel et bifonctionnel est compris entre 0,3 et 50, et est de préférence d'environ 5.

**23.** Polycondensat selon l'une quelconque des revendications 1 à 22, susceptible d'être obtenu par le procédé caractérisé en ce que l'amorceur monofonctionnel utilisé dans la première étape (i) de polymérisation du procédé est choisi notamment parmi les composés de formule:

$$(R')\text{-}M$$

dans laquelle:

M désigne un métal alcalin; et
R' désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle;

et les composés de formule:

$$(C_6H_5)_2CHM'$$

dans laquelle:

M' est choisi parmi le lithium, le sodium et le potassium.

**24.** Polycondensat selon la revendication 23, susceptible d'être obtenu par le procédé caractérisé en ce que ces amorceurs monofonctionnels sont choisis dans le goupe consistant en: le sec.-butyllithium, le n-butyllithium, le fluorényllithium, l'alphaméthylstyryllithium, le 1, 1-diphénylhexyllithium (DPHLi), le diphénylméthyl-lithium ou -sodium ou -potassium et le 1,1-diphényl-3-méthylpentyllithium, de préférence le DPHLi.

**25.** Polycondensat selon l'une quelconque des revendications 1 à 25, susceptible d'être obtenu par le procédé caractérisé en ce que l'amorceur bifonctionnel est choisi notamment parmi les composés de formule:

$$(R')_2\text{-}M$$

dans laquelle:

M désigne un métal alcalino-terreux; et

R' désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle;

et les composés de formule:

$$(C_{10}H_6)M'_2$$

dans laquelle:

M' est choisi parmi le lithium, le sodium et le potassium.

**26.** Polycondensat procédé selon l'une quelconque des revendications 1 à 25, susceptible d'être obtenu par le procédé caractérisé en ce que l'amorceur bifonctionnel est choisi notamment parmi des composés tels que le 1,1,4,4-tétraphényl-1,4-dilithio-butane (TPDLB), le 1,1,4,4-tétraphényl-1,4-disodiobutane, le naphtalène lithium, le naphtalène sodium, le naphtalène potassium et leurs homologues, de préférence le TPDLB ou le naphtalène lithium.

**27.** Polycondensat selon l'une quelconque des revendications 1 à 26, susceptible d'être obtenu par le procédé caractérisé en ce que le ligand est choisi parmi, d'une part, les sels minéraux de métaux alcalins ou alcalino-terreux, tels que les chlorures, fluorures, bromures, iodures, borures, sulfates, nitrates et borates, et, d'autre part, les sels organiques de métaux alcalins, tels que les alcoolates, les esters d'acide carboxylique substitué en position alpha par ledit métal et les sels dans lesquels ledit métal alcalin est associé à un groupe tel que:

(A) les groupes de formule:

$$-O-\underset{\underset{O}{\parallel}}{C}-R_1 \qquad (II)$$

dans laquelle $R_1$ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone;

(B) les groupes de formule:

$$-O-\underset{\underset{O}{\parallel}}{C}-(-CYZ-)_n CH_m X_{3-m} \qquad (III)$$

dans laquelle:

Y et Z, identiques ou différents l'un de l'autre, sont choisis parmi l'atome d'hydrogène et les atomes d'halogène;

n est un nombre entier allant de 0 à 4;

X est un atome d'halogène; et

m est un nombre entier allant de 0 à 2;

(C) les groupes de formule:

$$-O-SO_2-CT_3 \qquad (IV)$$

dans laquelle:

T est choisi parmi l'atome d'hydrogène et les atomes d'halogène; et

(D) les groupes de formule:

$$-B(R_2)_4 \qquad (V)$$

dans laquelle:

$R_2$ est choisi parmi l'atome d'hydrogène et les radicaux alkyle et aryle.

**28.** Polycondensat selon la revendication 27, susceptible d'être obtenu par le procédé caractérisé en ce que le ligand est choisi, pour les groupes de formule (II) parmi les groupes acétate, propionate et benzoate, pour les groupes de formule (III), parmi les groupes $\alpha$-bromoacétate et trifluoroacétate, pour les groupes de formule (IV), parmi les groupes trifluorométhanesulfonique et méthanesulfonique, pour les groupes de formule (V), parmi les groupes borohydrure et tétraphénylborure.

**29.** Polycondensat selon la revendication 27, susceptible d'être obtenu par le procédé caractérisé en ce que le ligand est LiCl.

**30.** Polycondensat selon l'une quelconque des revendications 1 à 26, susceptible d'être obtenu par le procédé caractérisé en ce que le ligand est constitué par un agent complexant macrocyclique non azoté, choisi parmi les polyéthers et les polythioéthers cycliques, tels que notamment les poly(thio)éthers macrocycliques dont l'anneau macrocyclique contient au moins 14 atomes de carbone et d'oxygène, chaque atome d'oxygène de l'anneau étant séparé des autres atomes d'oxygène de l'anneau par deux ou trois atomes de carbone.

**31.** Polycondensat selon l'une quelconque des revendications 1 à 30 susceptible d'être obtenu par le procédé caractérisé en ce que les réactions des étapes (i) et (ii) sont mises en oeuvre en présence d'au moins un solvant choisi parmi les solvants aromatiques, tels que le benzène, le toluène, ou les solvants tels que le tétrahydrofuranne (THF), le diglyme, le tétraglyme, l'orthoterphényle, le biphényle, la décaline, la tétraline ou le diméthylformamide, de préférence le THF ou le toluène.

**32.** Polycondensat selon l'une quelconque des revendications 1 à 31, susceptible d'être obtenu par le procédé caractérisé en ce que la température des réactions des étapes (i) et (ii) varie entre environ -100°C et 60°C, de préférence entre environ -80°C et 20°C.

**33.** Polycondensat selon l'une quelconque des revendications 1 à 32, susceptible d'être obtenu par le procédé caractérisé en ce que les réactions des étapes (i) et (ii) du procédé s'effectuent en milieu non-oxydant, anhydre et aprotique.

**34.** Polycondensat selon l'une quelconque des revendications 1 à 33, susceptible d'être obtenu par le procédé caractérisé en ce que la quantité totale du composé aldéhyde est ajoutée avant la gélification du milieu.

**35.** Polycondensat selon l'une quelconque des revendications 1 à 34, susceptible d'être obtenu par le procédé caractérisé en ce que le composé aldéhyde est introduit goutte-à-goutte.

**36.** Polycondensat selon l'une quelconque des revendications 1 à 35, susceptible d'être obtenu par le procédé caractérisé en ce que le milieu est acidifié avant séparation à l'aide d'un acide choisi dans le groupe consistant en les acides chlorhydrique, sulfurique, acétique, para- ou méthane-toluènesulfonique, et leurs mélanges.

**37.** Polycondensat selon l'une quelconque des revendications 1 à 36, susceptible d'être obtenu par le procédé caractérisé en ce que les blocs représentant une séquence d'un monomère acrylique et/ou méthacrylique, sont hydrolysés, totalement ou partiellement, en la séquence de l'acide acrylique et/ou méthacrylique correspondant.

**38.** Polycondensat selon la revendication 37, susceptible d'être obtenu par le procédé caractérisé en ce que ladite

séquence de l'acide acrylique et/ou méthacrylique correspondant est ultérieurement saponifiée, totalement ou partiellement, avec un sel d'un métal alcalin ou alcalino-terreux, en une séquence de l'acrylate et/ou du méthacrylate alcalin ou alcalino-terreux correspondant.

**39.** Polycondensat selon l'une quelconque des revendications 1 à 36, susceptible d'être obtenu par le procédé caractérisé en ce que les blocs représentant une séquence d'un monomère acrylique et/ou méthacrylique, sont transestérifiés, totalement ou partiellement, en une séquence d'un autre monomère acrylique et/ou méthacrylique, afin de remplacer un (meth)acrylate tertiaire par un (meth)acrylate secondaire, ou vice-versa, un (meth)acrylate secondaire par un (meth)acrylate primaire, ou vice-versa, un (meth)acrylate tertiaire par un (meth)acrylate primaire, ou vice-versa.

**40.** Procédé de préparation d'un polycondensat selon l'une quelconque des revendications 1 à 39, comprenat les étapes mentionnées dans l'une quelconque des revendications 1 à 39.

## Patentansprüche

**1.** Polykondensat, erhältlich durch ein Kupplungsverfahren eines lebenden Polymers, das lebende endständige (Meth-)Acryleinheiten enthält, wobei das Verfahren die folgenden Verfahrensschritte umfaßt:

(i) anionische Polymerisation mit Hilfe eines Startersystems, das aus einem monofunktionellen Starter und einem Liganden besteht, um ein lebendes Polymer zu erhalten, das lebende endständige (Meth-)Acryleinheiten enthält;
(ii) Reaktion mit einer Aldehydverbindung der Formel

$$R\text{-}(CHO)_r$$

in der $r \geq 2$; und die Gruppe R, die die Aldehydfunktionen enthält, eine Aralkyl-, Aryl-, Cycloalkyl- oder Alkylgruppe mit 2 bis 24 Kohlenstoffatomen ist, die gegebenenfalls mit einem oder mehreren Substituenten substituiert ist, die ausgewählt sind aus der Gruppe von $C_{1-6}$-Alkyl, $C_{1-6}$-Alkoxy oder Dialkyl($C_{1-6}$)amino, Halogen und Trifluormethyl;
(iii) Gewinnung des Endpolykondensats mittels an sich bekannten Methoden.

**2.** Polykondensat nach Anspruch 1, erhältlich durch ein Verfahren, dadurch gekennzeichnet, daß das Polymer aus Monomereinheiten besteht, die ausgewählt sind aus der Gruppe von Acrylmonomeren, Methacrylmonomeren, vinylaromatischen Monomeren, Dienmonomeren, Vinylpyridinmonomeren, Alkylenoxidmonomeren, Lactammonomeren, Lactonmonomeren und Maleinimidmonomeren.

**3.** Polykondensat nach Anspruch 1 oder 2, erhältlich durch ein Verfahren, dadurch gekennzeichnet, daß der Verfahrensschritt (i) besteht aus:

(i)

(a) anionischer Polymerisation eines Monomers A, ausgewählt aus der Gruppe von (Meth-)Acrylmonomeren, vinylaromatischen Monomeren, Dienmonomeren, Vinylpyridinmonomeren, Alkylenoxidmonomeren, Lactammonomeren, Lactonmonomeren und Maleinimidmonomeren, mit Hilfe eines Startersystems, bestehend aus mindestens einem monofunktionellen Starter und mindestens einem Ligand, was zu einem lebenden Polymer $(A)_a^-$ führt, wobei $a \leq 5.000$; gegebenenfalls
(b) Reaktion dieses lebenden $(A)_a^-$ mit einem Monomer B, das von A verschieden ist und ausgewählt ist aus der Gruppe von (Meth-)Acrylmonomeren, vinylaromatischen Monomeren, Dienmonomeren, Vinylpyridinmonomeren, Alkylenoxidmonomeren, Lactammonomeren, Lactonmonomeren und Maleinimidmonomeren, in Gegenwart mindestens eines Liganden, wie zuvor definiert, was zu einem Copolymer $(A)_a$-$(B)_b^-$ führt, wobei $b \leq 5.000$; gegebenenfalls
(c) Reaktion des lebenden $(A)_a$-$(B)_b^-$ mit einem Monomer C, das von B verschieden ist und ausgewählt ist aus der Gruppe von (Meth-)Acrylmonomeren, vinylaromatischen Monomeren, Dienmonomeren, Vinylpyridinmonomeren, Alkylenoxidmonomeren, Lactammonomeren, Lactonmonomeren und Maleinimidmonomeren, in Gegenwart mindestens eines Liganden, wie zuvor definiert, was zu einem lebenden Drei-

blockcopolymer $(A)_a$-$(B)_b$-$(c)_c^-$ mit $c \leq 5.000$ führt; gege benenfalls

.

.

.

(k) Reaktion des $(A)_a$-$(B)_b$-$(C)_c$-...-$(J)_j^-$ mit einem Monomer K, das von J verschieden ist und aus der Gruppe ausgewählt ist von (Meth-)Acrylmonomeren, vinylaromatischen Monomeren, Dienmonomeren, Vinylpyridinmonomeren, Alkylenoxidmonomeren, Lactammonomeren, Lactonmonomeren und Maleinimidmonomeren, in Gegenwart mindestens eines Liganden, wie zuvor definiert, was zu einem lebenden Multiblockpolymer $(A)_a$-$(B)_b$-$(C)_c$-...-$(K)_k^-$ führt, wobei $k \leq 5.000$; gegebenenfalls

.

.

.

schließlich die Reaktion des in dem vorhergehenden Verfahrensschritt erhaltenen lebenden Polymers mit einem (Meth-)Acrylmonomeren in Gegenwart mindestens eines Liganden, was zu einem lebenden Polymer $P^-$ führt.

**4.** Polykondensat nach Anspruch 1 oder 2, erhältlich durch ein Verfahren, dadurch gekennzeichnet, daß Verfahrensschritt (i) besteht aus:

(i)

(a) anionischer Polymerisation eines Monomers A ausgewählt aus der Gruppe von (Meth-)Acrylmonomeren, vinylaromatischen Monomeren, Dienmonomeren, Vinylpyridinmonomeren, Alkylenoxidmonomeren, Lactammonomeren, Lactonmonomeren und Maleinimidmonomeren, mit Hilfe eines Startersystems, das aus mindestens einem bifunktionellen Starter und mindestens einem Liganden besteht, was zu einem lebenden Polymer $^-(A)_a^-$ führt, wobei $a \leq 5.000$; gegebenenfalls

(b) Reaktion von $^-(A)_a^-$ mit einem Monomer B, das von A verschieden ist und ausgewählt ist aus der Gruppe von (Meth-)Acrylmonomeren, vinylaromatischen Monomeren, Dienmonomeren, Vinylpyridinmonomeren, Alkylenoxidmonomeren, Lactammonomeren, Lactonmonomeren und Maleinimidmonomeren, in Gegenwart mindestens eines Liganden, was zu einem lebenden Polymer $^-(B)_b$-$(A)_a(B)_b^-$ führt, wobei $b \leq 5.000$; gegebenenfalls

.

.

.

(k) Reaktion des $^-(J)_j$-$(B)_b$-$(A)_a$-$(B)_b$-...-$(J)_j^-$ mit einem Monomer K, das von J verschieden ist und ausgewählt ist aus der Gruppe von (Meth-)Acrylmonomeren, vinylaromatischen Monomeren, Dienmonomeren, Vinylpyridinmonomeren, Alkylenoxidmonomeren, Lactammonomeren, Lactonmonomeren und Maleinimidmonomeren, in Gegenwart mindestens eines Liganden, was zu einem symmetrischen lebenden Polymer $^-(K)_k$-...-$(A)_a$...-$(K)_k^-$ führt, wobei $k \leq 5.000$; gegebenenfalls

.

.

.

schließlich die Reaktion des im vorhergehenden Verfahren erhaltenen Polymers mit einem (Meth-)Acrylmonomer in Gegenwart mindestens eines Liganden, was zu einem lebenden Polymer $^-P^-$ führt.

**5.** Polykondensat nach Anspruch 3 oder 4, erhältlich durch ein Verfahren, dadurch gekennzeichnet, daß der Verfahrensschritt (i) mit den Monomeren A, B und C durchgeführt wird.

**6.** Polykondensat nach Anspruch 5, erhältlich durch ein Verfahren, dadurch gekennzeichnet, daß das Monomer A ausgewählt ist aus vinylaromatischen Monomeren, das Monomer B ausgewählt ist aus Vinylpyridinmonomeren und das Monomer C ausgewählt ist aus (Meth-)Arcylatmonomeren.

**7.** Polykondensat nach Anspruch 3 oder 4, erhältlich durch ein Verfahren, dadurch gekennzeichnet, das der Verfahrensschritt (i) mit den Monomeren A und B durchgeführt wird.

**8.** Polykondensat nach Anspruch 7, erhältlich durch ein Verfahren, dadurch gekennzeichnet, daß das Monomer A ausgewählt ist aus vinylaromatischen Monomeren und das Monomer B ausgewählt ist aus (Meth-)Acrylatmonomeren.

9. Polykondensat nach Anspruch 3 oder 4, erhältlich durch ein Verfahren, dadurch gekennzeichnet, daß der Verfahrensschritt (i) mit dem Monomer A durchgeführt wird.

10. Polykondensat nach Anspruch 9, erhältlich durch ein Verfahren, dadurch gekennzeichnet, daß das Monomer A Methylmethacrylat oder tert.-Butylacrylat ist.

11. Polykondensat nach einem der Ansprüche 3 bis 10, erhältlich durch ein Verfahren, dadurch gekennzeichnet, daß die Molekulargewichte der Blöcke $(A)_a$, gegebenenfalls $(B)_b$, gegebenenfalls $(C)_c$ und gegebenenfalls eines weiteren Blockes, falls vorhanden, zwischen 1.000 und 500.000, vorzugsweise zwischen 2.000 und 300.000, liegt.

12. Polykondensat nach Anspruch 5 oder 6, erhältlich durch ein Verfahren, dadurch gekennzeichnet, daß das Gewichtsverhältnis der Blöcke $(A)_a/(B)_b/(C)_c$ zwischen 1/500/500 und 500/1/1, vorzugsweise zwischen 1/100/100 und 100/1/1, liegt.

13. Polykondensat nach Anspruch 7 oder 8, wenn diese von Anspruch 3 abhängen, erhältlich durch ein Verfahren, dadurch gekennzeichnet, daß das Gewichtsverhältnis der Blöcke $(A)_a/(B)_b$ zwischen 1/500 und 500/1, vorzugsweise zwischen 1/99 bis 99/1, liegt.

14. Polykondensat nach Anspruch 7 oder 8, wenn diese von Anspruch 4 abhängen, erhältlich durch ein Verfahren, dadurch gekennzeichnet, daß das Gewichtsverhältnis der Blöcke $(B)_b/(A)_a/(B)_b$ zwischen 49/2/49 und 1/98/1, vorzugsweise zwischen 45/10/49 und 5/90/5, liegt.

15. Polykondensat nach einem der Ansprüche 1 bis 14, erhältlich durch ein Verfahren, dadurch gekennzeichnet, daß die Gruppe R, die die Aldehydfunktionen enthält, eine gegebenenfalls mit 1 bis 4 Gruppen substituierte Arylgruppe ist, die ausgewählt sind aus $C_{1-4}$-Alkylgruppen, Trifluormethylgruppen und Halogen.

16. Polykondensat nach einem der Ansprüche 1 bis 15, erhältlich durch ein Verfahren, dadurch gekennzeichnet, daß die Aldehydverbindung bifunktionell ist und r gleich 2 ist.

17. Polykondensat nach Anspruch 16, erhältlich durch ein Verfahren, dadurch gekennzeichnet, daß die Aldehydverbindung Terephthalaldehyd ist.

18. Polykondensat nach einem der Ansprüche 1 bis 17, erhältlich durch ein Verfahren, dadurch gekennzeichnet, daß die Aldehydverbindung multifunktionell ist und r größer als 2 ist.

19. Polykondensat nach Anspruch 18, erhältlich durch ein Verfahren, dadurch gekennzeichnet, daß die Aldehydverbindung 1,3,5-Triformylbenzol ist.

20. Polykondensat nach einem der Ansprüche 1 bis 19, erhältlich durch ein Verfahren, dadurch gekennzeichnet, daß die Menge des eingebrachten Di- oder Multialdehyds so gewählt ist, daß die molaren Verhältnisse Aldehyd/monofunktionelle Starter bzw. Aldehyd/bifunktionelle Starter in Bereichen von (0,2)-(10) bzw. (0,2)-(10), vorzugsweise von (0,5)-(1) bzw. (0,5)-(2), liegen.

21. Polykondensat nach Anspruch 20, erhältlich durch ein Verfahren, dadurch gekennzeichnet, daß die Menge an eingebrachter Aldehydverbindung im wesentlich stöchiometrisch in bezug auf den mono- oder bifunktionellen Starter ist.

22. Polykondensat nach einem der Ansprüche 1 bis 21, erhältlich durch ein Verfahren, dadurch gekennzeichnet, daß das Molverhältnis Ligand/monofunktioneller und bifunktioneller Starter zwischen 0,3 und 50, vorzugsweise etwa 5, beträgt.

23. Polykondensat nach einem der Ansprüche 1 bis 22, erhältlich durch ein Verfahren, dadurch gekennzeichnet, daß der im ersten Polymerisationsverfahrensschritt (i) des Verfahrens verwendete monofunktionelle Starter insbesondere ausgewählt ist aus Verbindungen der Formel

$$(R')\text{-}M$$

in der:

- M ein Alkalimetall bezeichnet; und
- R' einen geradkettigen oder verzweigten Alkylrest mit 2 bis 6 Kohlenstoffatomen oder einen gegebenenfalls substituierten Arylrest oder einen Alkylrest mit 1 bis 6 Kohlenstoffen bezeichnet, der mit mindestens einer Phenylgruppe substituiert ist;

und Verbindungen der Formel

$$(C_6H_5)_2CHM'$$

in der:

- M' ausgewählt ist aus Lithium, Natrium und Kalium.

**24.** Polykondensat nach Anspruch 23, erhältlich durch ein Verfahren, dadurch gekennzeichnet, daß die monofunktionellen Starter ausgewählt aus der Gruppe von sek.-Butyllithium, n-Butyllithium, Fluorenyllithium, α-Methylstyryllithium, 1,1-Diphenylhexyllithium (DPHLi), Diphenylmethyllithium oder -natrium oder -kalium und 1,1-Diphenyl-3-methylpentyllithium, vorzugsweise DPHLi.

**25.** Polykondensat nach einem der Ansprüche 1 bis 25, erhältlich durch ein Verfahren, dadurch gekennzeichnet, daß der bifunktionelle Starter insbesondere ausgewählt ist aus Verbindungen der Formel

$$(R')_2\text{-}M$$

in der:

- M ein Erdalkalimetall bezeichnet; und
- R' einen geradkettigen oder verzweigten Alkylrest mit 2 bis 6 Kohlenstoffatomen oder einen gegebenenfalls substituierten Arylrest oder einen Alkylrest mit 1 bis 6 Kohlenstoffatomen bezeichnet, der mit mindestens einer Phenylgruppe substituiert ist;

und aus Verbindungen der Formel

$$(C_{10}H_6)M'_2$$

in der:

- M' ausgewählt ist aus Lithium, Natrium und Kalium.

**26.** Polykondensat nach einem der Ansprüche 1 bis 25, erhältlich durch ein Verfahren, dadurch gekennzeichnet, daß der bifunktionelle Starter insbesondere ausgewählt ist aus Verbindungen wie 1,1,4,4-Tetraphenyl-1,4-dilithiobutan (TPDLB), 1,1,4,4-Tetraphenyl-1,4-dinatriumbutan, Naphthalinlithium, Naphthalinnatrium, Naphthalinkalium und deren Homologe, vorzugsweise TPDLB oder Naphthalinlithium.

**27.** Polykondensat nach einem der Ansprüche 1 bis 26, erhältlich durch ein Verfahren, dadurch gekennzeichnet, daß der Ligand ausgewählt ist aus einerseits anorganischen Alkalimetall- oder Erdalkalimetallsalzen wie Chloriden, Fluoriden, Bromiden, Jodiden, Boriden, Sulfaten, Nitraten und Boraten und andererseits aus organischen Alkalimetallsalzen wie Alkoholaten, Carbonsäureestem, die in α-Position mit dem Metall substituiert sind, und Salzen, in denen das Alkalimetall mit einer Gruppe verbunden ist, wie

(A) Gruppen der Formel

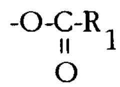

(II)

in der $R_1$ ein linearer oder verzweigter Alkylrest mit 1 bis 20 Kohlenstoffatomen oder ein Cycloalkylrest mit 3 bis 20 Kohlenstoffatomen oder auch ein Arylrest mit 6 bis 14 Kohlenstoffatomen ist;
(B) Gruppen der Formel

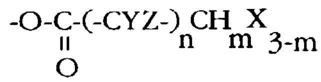

(III)

in der:

- Y und Z, identisch oder verschieden, ausgewählt sind aus Wasserstoffatom und Halogenatomen;
- n eine ganze Zahl von 0 bis 4 ist;
- X ein Halogenatom ist; und
- m eine ganze Zahl von 0 bis 2 ist;

(C) Gruppen der Formel

$$-O-SO_2-CT_3 \qquad (IV)$$

in der:

- T ausgewählt ist aus einem Wasserstoffatom und Halogenatom; und

(D) Gruppen der Formel

$$-B(R_2)_4 \qquad (V)$$

in der:

- $R_2$ ausgewählt ist aus einem Wasserstoffatom und Alkyl- und Arylresten.

**28.** Polykondensat nach Anspruch 27, erhältlich durch ein Verfahren, dadurch gekennzeichnet, daß der Ligand ausgewählt ist für Gruppen der Formel (II) aus Acetat-, Propionat- und Benzoatgruppen und für Gruppen der Formel (III) aus $\alpha$-Bromacetat- und Trifluoracetatgruppen und für Gruppen der Formel (IV) aus Trifluormethansulfonsäure- und Methansulfonsäuregruppen und für Gruppen der Formel (V) aus Borhydrid- und Tetraphenylborhydridgruppen.

**29.** Polykondensat nach Anspruch 27, erhältlich durch ein Verfahren, dadurch gekennzeichnet, daß der Ligand LiCl ist.

**30.** Polykondensat nach einem der Ansprüche 1 bis 26, erhältlich durch ein Verfahren, dadurch gekennzeichnet, daß der Ligand aus einem nichtstickstoffhaltigen, makrocyclischen komplexierenden Reagenz besteht, das ausgewählt ist aus cyclischen Polyethern und Polythioethem, insbesondere makrocyclischen Poly(thio)ethern, deren makrocyclischer Ring mindestens 14 Kohlenstoff- und Sauerstoffatomen enthält, wobei jedes Sauerstoffatom des Rings von den anderen Sauerstoffatomen des Rings durch zwei oder drei Kohlenstoffatome getrennt ist.

**31.** Polykondensat nach einem der Ansprüche 1 bis 30, erhältlich durch ein Verfahren, dadurch gekennzeichnet, daß die Reaktionen der Verfahrensschritte (i) und (ii) in Gegenwart mindestens eines Lösemittels durchgeführt werden, das ausgewählt ist aus aromatischen Lösemitteln wie Benzol und Toluol oder Lösemitteln wie Tetrahydrofuran (THF), Diglyme, Tetraglyme, Orthoterphenyl, Biphenyl, Dekalin, Tetralin oder Dimethylformamid, vorzugsweise

THF oder Toluol.

**32.** Polykondensat nach einem der Ansprüche 1 bis 31, erhältlich durch ein Verfahren, dadurch gekennzeichnet, daß die Reaktionstemperatur der Verfahrensschritte (i) und (ii) zwischen etwa -100 °C und 60 °C, vorzugsweise zwischen etwa -80 °C und 20 °C, variiert.

**33.** Polykondensat nach einem der Ansprüche 1 bis 32, erhältlich durch ein Verfahren, dadurch gekennzeichet, daß die Reaktionen der Verfahrensschritte (i) und (ii) des Verfahrens in einem nichtoxidierenden, wasserfreien aprotischen Milieu durchgeführt werden.

**34.** Polykondensat nach einem der Ansprüche 1 bis 33, erhältlich durch ein Verfahren, dadurch gekennzeichnet, daß die gesamte Menge der Aldehydverbindung vor der Gelbildung des Milieus zugegeben wird.

**35.** Polykondensat nach einem der Ansprüche 1 bis 34, erhältlich durch ein Verfahren, dadurch gekennzeichnet, daß die Aldehydverbindung Tropfen für Tropfen hinzugegeben wird.

**36.** Polykondensat nach einem der Ansprüche 1 bis 35, erhältlich durch ein Verfahren, dadurch gekennzeichnet, daß das Milieu vor der Trennung mit Hilfe einer Säure angesäuert wird, die ausgewählt ist aus der Gruppe von Chlorwasserstoffsäure, Schwefelsäure, Essigsäure, para-Toluolsulfonsäure oder Methantoluolsulfonsäure und deren Mischungen.

**37.** Polykondensat nach einem der Ansprüche 1 bis 36, erhältlich durch ein Verfahren, dadurch gekennzeichnet, daß die Blöcke, die einen Block eines Acrylmonomers und/oder Methacrylmonomers darstellen, in ihrer Gesamtheit oder teilweise zu einem entsprechenden Block von Acrylsäure und/oder Methacrylsäure hydrolysiert werden.

**38.** Polykondensat nach Anspruch 37, erhältlich durch ein Verfahren, dadurch gekennzeichnet, daß der Block der entsprechenden Acryl- und/oder Methacrylsäure schließlich, in der Gesamtheit und teilweise, mit einem Alkalimetall- oder Erdalkalimetallsalz zu einem entsprechenden Alkali- oder Erdalkaliacrylatblock und/oder Alkali- oder Erdalkalimethacrylatblock verseift wird.

**39.** Polykondensat nach einem der Ansprüche 1 bis 36, erhältlich durch ein Verfahren, dadurch gekennzeichnet, daß die Blöcke, die einen Block eines Acrylmonomers und/oder Methacrylmonomers darstellen, in ihrer Gesamtheit oder teilweise zu einem Block eines anderen Acryl- und/oder Methacrylmonomers umgeestert werden, um ein tertiäres (Meth-)Acrylat durch ein sekundäres (Meth-)Acrylat zu ersetzen oder umgekehrt oder ein sekundäres (Meth-)Acrylat durch ein primäres (Meth-)Acrylat zu ersetzen oder umgekehrt oder ein tertiäres (Meth-)Acrylat durch ein primäres (Meth-)Acrylat zu ersetzen oder umgekehrt.

**40.** Verfahren zur Herstellung eines Polykondensats nach einem der Ansprüche 1 bis 39, enthaltend die Verfahrensschritte, die in einem der Ansprüche 1 bis 39 erwähnt sind.

**Claims**

**1.** A polycondensate obtainable by the process of coupling a living polymer containing living terminal (meth)acrylic units comprising the steps of:

(i) anionic polymerisation using an initiator system consisting of a functional initiator and a ligand in order to obtain a living polymer containing living terminal (meth)acrylics units;
(ii) reacting it with an aldehyde compound of formula:

$$R\text{-}(CHO)_r$$

in which $r \geq 2$; R can be an alkyl, cycloalkyl, aryl, aralkyl group, containing 2 to 24 carbon atoms, unsubstituted or substituted with one or several substituents selected from the group comprising: $C_{1-6}$ alkyl, $C_{1-6}$ alkoxy or di($C_{1-6}$alkyl)amino, halogen, trifluoromethyl; and
(iii) recovering the final polycondensate by means known per se.

**2.** Polycondensate according to claim 1, obtainable by the process characterized in that said polymer consists of monomer units selected from the group consisting of: acrylic, methacrylic, vinylaromatic, dienic, vinylpyridines, alkylene oxide, lactames, lactones and maleimides monomers.

**3.** Polycondensate according to claim 1 or 2, obtainable by the process characterized in that step (i) consists of:

(i)

(a) anionic polymerisation of a monomer A selected from the group consisiting of: (meth)acrylic, vinylaromatic, dienic, vinylpyridines, alkylene oxides, lactames, lactones and maleimides monomers, using an initiator system consisting of at least one monofunctional initiator and at least one ligand leading to the living polymer $(A)_a^-$, with $a \leq 5\,000$; then optionally
(b) reacting said living polymer $(A)_a^-$ with a monomer B different from A, selected from the group consisting of: (meth)acrylic, vinylaromatic, dienic, vinylpyridines, alkylene oxides, lactames, lactones and maleimides monomers, in the presence of at least one ligand as defined above, leading to the polymer $(A)_a$-$(B)_b^-$, with $b \leq 5\,000$; then optionally
(c) reacting said living $(A)_a$-$(B)_b^-$ copolymer with a monomer C different from B, selected from the group consisting of: (meth)acrylic, vinylaromatic, dienic, vinylpyridines, alkylene oxides, lactames, lactones and maleimides monomers, in the presence of at least one ligand as defined above, leading to the living tri-sequenced polymer $(A)_a$-$(B)_b$-$(C)_c^-$, with $c \leq 5\,000$; then optionally

.
.
.

(k) reacting said $(A)_a$-$(B)_b$-$(C)_c$-...-$(J)_j^-$ polymer with a monomer K different from J, selected from the group consisting of: (meth)acrylic, vinylaromatic, dienic, vinylpyridines, alkylene oxides, lactames, lactones and maleimides monomers, in the presence of at least one ligand such as defined above leading to the living tri-sequenced polymer $(A)_a$-$(B)_b$-$(C)_c$-...-$(K)_k^-$, with $k \leq 5\,000$; then optionally

.
.
.

and finally reacting the living polymer obtained from the previous step with a (meth)acrylic monomer in the presence of at least one ligand leading to a living polymer P-.

**4.** Polycondensate according to claim 1 or 2, obtainable by the process characterized in that step (i) consists of:

(i)

(a) anionic polymerisation of a monomer A selected from the group consisting of: (meth)acrylic, vinylaromatic, dienic, vinylpyridine, alkylene oxides, lactames, lactones and maleimides monomers, using an initiator system consisting of at least one bi-functional initiator and at least one ligand leading to the living polymer - $(A)_a^-$, $a \leq 5\,000$; then optionally
(b) reacting said living polymer $^-(A)_a^-$ with a monomer B different from A, selected from the group consisting of: (meth)acrylic, vinylaromatic, dienic, vinylpyridines, alkylene oxides, lactames, lactones and maleimides monomers, in the presence of at least one ligand, leading to the living symmetrical polymer $^-(B)_b$-$(A)_a$-$(B)_b^-$, $b \leq 5\,000$; then optionally

.
.
.

(k) reacting said $^-(J)_j$-$(B)_b$-$(B)_b$-...-$(J)_j^-$ polymer with a monomer K different from J, selected from the group consisting of: (meth)acrylic, vinylaromatic, dienic, vinylpyridines, alkylene oxides, lactames, lactones and maleimides monomers, in the presence of at least one ligand leading to the living symmetrical polymer $^-(K)_k$-...-$(A)_a$-...-$(K)_k^-$, with $k \leq 5\,000$; and optionally

.
.

and finally reacting the living symmetrical polymer obtained from the previous step with a (meth)acrylic monomer in the presence of at least one ligand leading to a living polymer -P-.

**5.** Polycondensate according to claim 3 or 4, obtainable by the process characterized in that step (i) is carried out

with monomers A, B and C.

**6.** Polycondensate according to claim 5, obtainable by the process characterized in that monomer A is selected from the vinylaromatics, monomer B from the vinylpyridines, and monomer C from the (meth)acrylates.

**7.** Polycondensate according to claim 3 or 4, obtainable by the process characterized in that step (i) is carried out with monomers A and B.

**8.** Polycondensate according to claim 7, obtainable by the process characterized in that monomer A is selected from the vinylaromatics, and monomer B is selected from the (meth)acrylates.

**9.** Polycondensate according to claim 3 or 4, obtainable by the process characterized in that step (i) is carried out with monomer A.

**10.** Polycondensate according to claim 9, obtainable by the process characterized in that monomer A is methylmethacrylate or tert-butylacrylate.

**11.** Polycondensate according to one of claims 3 to 10, obtainable by the process characterized in that the molecular weights of sequences $(A)_a$, and $(B)_b$ and $(C)_c$ and other sequences when present is comprised between 1 000 and 500 000, preferably between 2 000 and 300 000.

**12.** Polycondensate according to claim 5 or 6, obtainable by the process characterized in that the weight ratio of sequences $(A)_a/(B)_b/(C)_c$ is comprised between 1/500/500 and 500/1/1, preferably 1/100/100 and 100/1/1.

**13.** Polycondensate according to claim 7 or 8 when dependent on claim 3, obtainable by the process characterized in that the weight ratio of sequences $(A)_a/(B)_b$ is comprised between 1/500 and 500/1, preferably 1/99 to 99/1.

**14.** Polycondensate according to claim 7 or 8 when dependent on claim 4, obtainable by the process characterized in that the weight ratio of sequences $(B)_b/(A)_a/(B)_b$ is comprised between 49/2/49 and 1/98/1, preferably between 45/10/45 and 5/90/5.

**15.** Polycondensate according to one of claims 1 to 14, obtainable by the process characterized in that the group R is an aryl group, unsubstituted or substituted by 1 to 4 groups selected from $C_{1-4}$ alkyl, trifluoromethyl, halogen.

**16.** Polycondensate according to one of claims 1 to 15, obtainable by the process characterized in that said aldehyde compound is bi-functional, r being equal to 2.

**17.** Polycondensate according to claim 16, obtainable by the process characterized in that said aldehyde compound is terephthalaldehyde.

**18.** Polycondensate according to one of claims 1 to 17, obtainable by the process characterized in that said aldehyde compound is multifunctional, r being greater than 2.

**19.** Polycondensate according to claim 18, obtainable by the process characterized in that said aldehyde compound is 1,3,5-triformylbenzene.

**20.** Polycondensate according to any one of claims 1 to 19, obtainable by the process characterized in that the amount of di- or multi- functional aldehyde introduced is such that the aldehyde/monofunctional initiator and aldehyde/bifunctional initiator ratios are respectively comprised in the range (0.2)-(10) and (0.2)--(10), and preferably (0.5)-(1) and (0.5)-(2) respectively.

**21.** Polycondensate according to claim 20, obtainable by the process characterized in that said aldehyde compound is introduced substantially in a stoichiometric amount with respect to said mono-functional or bi-functional initiator.

**22.** Polycondensate according to any one of claims 1 to 21, obtainable by the process characterized in that the ligand/mono-functional or bi-functional initiator ratio is in the range 0.3 to 50, and preferably is about 5.

**23.** Polycondensate according to one of claims 1 to 22, obtainable by the process characterized in that the mono

functional initiator employed in the first polymerisation step (i) of the process is selected from compounds of the formula:

$$(R')\text{-}M$$

in which:

M is an alkaline-earth metal; and
R' is a straight or branched alkyl radical with 2 to 6 carbon atoms or an optionally substituted aryl radical, or an alkyl radical with 1 to 6 carbon atoms substituted by at least one phenyl group;

and compounds of the formula:

$$(C_6H_5)_2CHM'$$

in which:
M' is selected from lithium, sodium and potassium.

**24.** Polycondensate according to claim 23, obtainable by the process characterized in that said mono-functional initiators are selected from the group consisiting of: sec.-butyllithium, n-butyllithium, fluorenyllithium, alphamethylstyryllithium, 1,1-diphenylhexyllithium (DPHLi), diphenylmethyl-lithium or -sodium or -potassium and 1,1-diphenyl-3-methylpentyllithium and preferably is DPHLi.

**25.** Polycondensate according to any one of claims 1 to 24, obtainable by the process characterized in that the bifunctional initiator employed in the first polymerisation step (i) of the process is selected from compounds of the formula:

$$(R')_2\text{-}M$$

in which:

M is an alkaline-earth metal; and
R' is a straight chain or branched alkyl radical with 2 to 6 carbon atoms or an optionally substituted aryl radical, or an alkyl radical with 1 to 6 carbon atoms substituted by at least one phenyl group;

and compounds of the formula:

$$(C_{10}H_6)M'_2$$

in which:
M' is selected from lithium, sodium and potassium.

**26.** Polycondensate according to any one of claims 1 to 25, obtainable by the process characterized in that the bifunctional initiator is selected from the group consisting of: 1,1,4,4-tetraphenyl-1,4-dilithio-butane (TPDLB), 1,1,4,4-tetraphenyl-1,4-disodiobutane, naphthalene lithium, naphthalene sodium, naphthalene potassium and homologues thereof, and preferably are TPDLB or naphthalene lithium.

**27.** Polycondensate according to any one of claims 1 to 26, obtainable by the process characterized in that said ligand is selected for the one part from alkaline or alkalineearth mineral salts such as chlorides, fluorides, bromides, iodides, borides, sulfates, nitrates and borates, and, for the other part, from alkaline metal organic salts, such as alcoholates, carboxylic acid esters substituted in the alpha position by said metal, and the salts in which said alkaline metal is associated with a group such as:

(A) groups of formula:

$$-O-\underset{\overset{\|}{O}}{C}-R_1 \qquad (II)$$

in which $R_1$ is a straight or branched alkyl radical with 1 to 20 carbon atoms, or a cycloalkyl radical with 3 to 20 carbon atoms, or an aryl radical with 6 to 14 carbon atoms;
(B) groups of formula:

$$-O-\underset{\overset{\|}{O}}{C}-(-CYZ-)_nCH_mX_{3-m} \qquad (III)$$

in which:

Y and Z, which may be the same or different, are selected from hydrogen and halogen atoms;
n is an integer from 0 to 4;
X is a halogen atom; and
m is an integer from 0 to 2;

(C) groups of formula:

$$-O-SO_2-CT_3 \qquad (IV)$$

in which:
T is selected from hydrogen and halogen atoms; and
(D) groups of formula:

$$-B(R_2)_4 \qquad (V)$$

in which:
$R_2$ is selected from hydrogen, and alkyl and aryl radicals.

**28.** Polycondensate according to claim 27, obtainable by the process characterized in that said ligand is selected, for groups of formula (II) from acetate, propionate and benzoate groups, for groups of formula (III), from bromoacetate and trifluoroacetate groups, for groups of formula (IV), from trifluoromethanesulfonic and methanesulfonic groups, for groups of formula (V), from borohydrate and tetraphenylborate groups.

**29.** Polycondensate according to claim 27, obtainable by the process characterized in that said ligand is LiCl.

**30.** Polycondensate according to claim 1 to 26, obtainable by the process characterized in that said ligand consists of a non-nitrogenous macrocyclic complexing agent, selected from cyclic polyethers and polythioethers, such as macrocyclic poly(thio)ethers having a macrocyclic ring containing at least 14 carbon and oxygen atoms, each oxygen atom of the ring being separated from the other oxygen atoms of the ring by two or three carbon atoms.

**31.** Polycondensate according to claim 1 to 30, obtainable by the process characterized in that the reactions of steps (i) and (ii) are carried out in the presence of at least one solvent selected from the group consisting of: aromatic solvents such as benzene, toluene, or solvents such as tetrahydrofuran (THF), diglyme, tetraglyme, orthoterphenyl, biphenyl, decaline, tetraline or dimethylformamide and preferably the solvant is THF or toluene.

**32.** Polycondensate according to claim 1 to 31, obtainable by the process characterized in that the reaction temperature of steps (i) and (ii) varies between about -100°C and 60°C, preferably between about -80°C and 20°C.

**33.** Polycondensate according to claim 1 to 32, obtainable by the process characterized in that the reactions of steps (i) and (ii) of the process are carried out in a non-oxydizing, anhydrous and aprotic medium.

**34.** Polycondensate according to claim 1 to 33, obtainable by the process characterized in that the total amount of said aldehyde compound is added before gelation of the medium.

**35.** Polycondensate according to claim 1 to 33, obtainable by the process characterized in that said aldehyde compound is introduced dropwise.

**36.** Polycondensate according to claim 1 to 35, obtainable by the process characterized in that the medium is acidified before separation, using an acid selected from the group consisting of: hydrochloric, sulfuric, acetic, para- or methane-toluenesulfonic acids, and mixtures thereof.

**37.** Polycondensate according to claim 1 to 36, obtainable by the process characterized in that the blocks representing an acrylic and/or methacrylic monomer sequence are totally or partially hydrolysed, into the corresponding acrylic and/or methacrylic acid sequence.

**38.** Polycondensate according to claim 37, obtainable by the process characterized in that said corresponding acrylic and/or methacrylic acid sequence is subsequently totally or partially saponified with an alkaline or alkaline-earth metal salt to a corresponding alkaline or alkaline-earth acrylate and/or methacrylate sequence.

**39.** Polycondensate according to claim 1 to 36, obtainable by the process characterized in that the blocks representing an acrylic and/or methacrylic monomer sequence are totally or partially transesterified to a sequence of another acrylic and/or methacrylic monomer, in order to replace tertiary (meth)acrylate by a secondary (meth)acrylate or vice-versa, a secondary (meth)acrylate by a primary (meth)acrylate or vice-versa, a tertiary (meth)acrylate by a primary (meth)acrylate or vice-versa.

**40.** A process for preparing a polycondensate according to any one of claims 1 to 39, comprising the steps recited in any of claims 1 to 39.